(19) **Europäisches Patentamt European Patent Office Office européen des brevets**

(11) **EP 4 419 283 B1**

(12) **EUROPÄISCHE PATENTSCHRIFT**

(45) Veröffentlichungstag und Bekanntmachung des Hinweises auf die Patenterteilung:
**08.10.2025 Patentblatt 2025/41**

(21) Anmeldenummer: **22803226.4**

(22) Anmeldetag: **17.10.2022**

(51) Internationale Patentklassifikation (IPC):
***B23K 9/067*** *(2006.01)*  ***B23K 9/073*** *(2006.01)*
***B23K 9/095*** *(2006.01)*  ***B23K 9/167*** *(2006.01)*
***H01F 27/40*** *(2006.01)*  ***H01F 38/08*** *(2006.01)*

(52) Gemeinsame Patentklassifikation (CPC):
**B23K 9/167; B23K 9/0673; B23K 9/0738; B23K 9/095; H01F 27/402; H01F 38/085**

(86) Internationale Anmeldenummer:
**PCT/EP2022/078816**

(87) Internationale Veröffentlichungsnummer:
**WO 2023/066857 (27.04.2023 Gazette 2023/17)**

(54) **VORRICHTUNG UND VERFAHREN ZUR DURCHFÜHRUNG EINES SCHWEISSPROZESSES**

METHOD AND DEVICE FOR IMPLEMENTATION OF A WELDING PROCESS

DISPOSITIF ET PROCÉDÉ DESTINÉS À LA MISE EN OEUVRE D'UN PROCÉDÉ DE SOUDAGE

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorität: **19.10.2021 EP 21203528**

(43) Veröffentlichungstag der Anmeldung:
**28.08.2024 Patentblatt 2024/35**

(73) Patentinhaber: FRONIUS INTERNATIONAL GmbH
**4643 Pettenbach (AT)**

(72) Erfinder:
• **SÖLLINGER, Dominik**
  **4600 Wels-Thalheim (AT)**
• **ITZENBERGER, Daniel**
  **4600 Wels-Thalheim (AT)**
• **LATTNER, Peter**
  **4600 Wels-Thalheim (AT)**

(74) Vertreter: **Patentanwälte Pinter & Weiss OG**
**Prinz-Eugen-Straße 70**
**1040 Wien (AT)**

(56) Entgegenhaltungen:
**EP-B1- 1 021 269    US-A- 3 932 728
US-A- 6 075 224**

## Beschreibung

Die Erfindung betrifft eine Schweißvorrichtung zur Durchführung eines WIG-Schweißprozesses an einem Werkstück, wobei in der Schweißvorrichtung eine Schweißstromquelle mit einem ersten Pol und mindestens einem zweiten Pol vorgesehen ist, wobei der erste Pol mit einem, eine nicht-abschmelzenden Elektrode umfassenden, WIG-Schweißbrenner elektrisch verbunden ist und der zweite Pol mit dem Werkstück elektrisch verbindbar ist, wobei in der Schweißvorrichtung zwischen dem ersten Pol der Schweißstromquelle und der nicht-abschmelzenden Elektrode eine Zündeinrichtung zur Erzeugung einer Zündspannung zum berührungslosen Zünden eines Lichtbogens zwischen der nicht-abschmelzenden Elektrode und dem Werkstück vorgesehen ist, wobei in der Schweißvorrichtung eine erste Spannungsmesseinrichtung zur Erfassung einer Stromquellenspannung zwischen dem ersten Pol und dem zweiten Pol der Schweißstromquelle vorgesehen ist und wobei in der Schweißvorrichtung eine Steuerungseinheit vorgesehen ist, die dazu ausgebildet ist, die Stromquellenspannung zur Steuerung des Schweißprozesses zu verwenden. Weiters betrifft die Erfindung ein Verfahren zur Durchführung eines WIG-Schweißprozesses mit einer nicht-abschmelzenden Elektrode an einem Werkstück.

Bei einer herkömmlichen WIG (Wolfram Inert Gas)-Anlage oder auch bei Multiprozessanlagen (Metall-Schutzgas - MSG und WIG) benötigt man zur Bestimmung der Lichtbogenspannung eine Spannungsmesseinheit. Diese Spannungsmesseinheit sitzt üblicherweise im Schweißgerät und misst die Spannung zwischen der Anschlussbuchse für den WIG-Schweißbrenner und ggf. der Anschlussbuchse für den MSG-Schweißbrenner und der Anschlussbuchse für das Massekabel. Die gemessene Spannung kann annäherungsweise als Lichtbogenspannung herangezogen und zur Regelung des Schweißprozesses verwendet werden. Zum berührungslosen Zünden eines Lichtbogens zwischen der WIG-Elektrode und dem Werkstück kommt oftmals eine sogenannte HF(Hochfrequenz)-Zündung zum Einsatz. Dabei ist in der WIG-Leitung eine sogenannte HF-Zündeinrichtung integriert, die eine Spulenanordnung umfasst, welche eine in der Regel gepulste Spannung (von beispielsweise bis zu 2500 V) in eine (hohe) Zündspannung transformiert. Die Zündspannung ionisiert die Gasstrecke zwischen der Elektrode und dem Werkstück, sodass ein Lichtbogen gezündet wird. Die Zündspannung kann dabei, je nach Elektrodenabstand, im Bereich einiger kV bis zu 20kV betragen.

Aufgrund der Spannungsmessung an den Anschlussbuchsen enthält die gemessene Spannung (die als Lichtbogenspannung verwendet wird) allerdings auch einen Spannungsabfall an der HF-Zündeinrichtung und ggf. einen Spannungsabfall in der Schweißleitung, die zum Schweißbrenner führt. Die Spulenanordnung der HF-Zündeinrichtung hat in der Regel eine nichtlineare Induktivitäts-Strom-Kennlinie und weist bei geringen Strömen im Bereich weniger Ampere eine sehr hohe Induktivität auf. Mit steigendem Strom beginnt die Induktivität zu sättigen. Dieses nichtlineare Verhalten hat bei geringen Strömen wegen des relativ hohen Spannungsabfalls eine negative Auswirkung auf die Spannungsmessung, was das Messergebnis verfälscht, sodass die gemessene Spannung unter Umständen stark von der tatsächlichen Lichtbogenspannung abweicht. Dies wirkt sich in Folge negativ auf die Regelung des Schweißprozesses und u.U. auch negativ auf die erzeugte Schweißnaht aus. Um beim WIG-Schweißen die richtige Lichtbogenspannung erfassen zu können, müsste man die Schweißspannung folglich erst nach der HF-Zündeinrichtung erfassen. Das Problem dabei ist allerdings, dass das Spannungspotential der Zündspannung 10 kV oder mehr betragen kann und somit die Realisierung einer Messschaltung nicht ohne weiteres möglich ist.

Die EP 1021269 B1 beschreibt eine WIG-Schweißvorrichtung mit einer HF-Zündeinrichtung und mit einer separaten Spannungsmessung an der Elektrode zur Erfassung einer Lichtbogenspannung. An der HF-Zündeinrichtung sind eine Sekundärwicklung zur Einkopplung einer HF-Spannung in die Schweißleitung sowie eine in die Messleitung integrierte Messwicklung vorgesehen. Die Messwicklung dient dazu, um zu verhindern, dass die HF-Spannung in den Leistungsteil der Schweißstromquelle eindringt. Die Messwicklung besteht aus einem dünnen, gut isolierten Kabel, das zusammen mit der Sekundärwicklung gewickelt wird. Die Messwicklung und die Sekundärwicklung haben die gleiche Wickelrichtung und die gleiche Wicklungsanzahl. An der Messwicklung und der Sekundärwicklung wird somit jeweils die gleiche Spannung induziert.

Die US 2561995 A beschreibt ein Lichtbogenzünd- und Stabilisierungssystem, das einen Koppeltransformator umfasst. Am Koppeltransformator sind eine Sekundärwicklung zur Einkopplung einer Spannung in den Schweißkreis, eine erste Primärwicklung mit relativ geringen Wicklungsanzahl und eine zweite Primärwicklung mit einer relativ großen Wicklungsanzahl vorgesehen. Es wird ein Überhöhungsverhältnis und ein Unterhöhungsverhältnis zum Lichtbogenschweißkreis beschrieben.

Es ist daher eine Aufgabe der Erfindung eine Schweißvorrichtung und ein Verfahren zur Durchführung eines WIG-Schweißprozesses bereitzustellen, die eine verbesserte Regelung des Schweißprozesses ermöglicht.

Die Aufgabe wird mit der eingangs genannten Schweißvorrichtung erfindungsgemäß dadurch gelöst, dass in der Zündeinrichtung eine Messwicklung vorgesehen ist und in der Schweißvorrichtung eine zweite Spannungsmesseinrichtung zur Erfassung einer Messwicklungsspannung an der Messwicklung vorgesehen ist und/oder dass in der Schweißvorrichtung eine Messwicklungssimulationseinrichtung zur Simulation einer virtuellen Messwicklung der Zündeinrichtung und zur Ermittlung einer Messwicklungsspannung an der virtuellen Messwicklung vorgesehen ist und dass die Steuerungseinheit dazu ausgebildet ist, die Stromquellenspannung und die von der zweiten Spannungsmesseinrichtung erfasste oder von der Messwicklungssimulationseinrichtung ermittelte Messwicklungsspannung zur Ermittlung einer WIG-Lichtbogenspannung am WIG-Lichtbogen zu verwenden und die ermittelte WIG-Lichtbogenspannung zur Steuerung des WIG-Schweißprozesses zu verwenden. Dadurch kann eine genauere Ermittlung der WIG-Lichtbogenspannung beim WIG-Schweißen erfolgen, wodurch die Regelung des Schweißprozesses und folglich die Schweißqualität verbessert werden können.

Vorzugsweise ist die Steuerungseinheit dazu ausgebildet, aus der Messwicklungsspannung und einem festgelegten Proportionalitätsfaktor einen Spannungsabfall an der Sekundärwicklung der Zündeinrichtung zu ermitteln und die WIG-Lichtbogenspannung aus einer Differenz zwischen der Stromquellenspannung und dem Spannungsabfall zu ermitteln. Dadurch kann die erfasste Spannung an der Messwicklung in einfacher Weise zur Berechnung der interessierenden WIG-Lichtbogenspannung verwendet werden.

Vorzugsweise ist in der Zündeinrichtung eine Spulenanordnung mit einem Spulenkern vorgesehen, an dem die Sekundärwicklung und die Messwicklung angeordnet sind, wobei sich eine Sekundärwicklungsanzahl der Sekundärwicklung und eine Messwicklungsanzahl der Messwicklung unterscheiden. Die Messwicklungsanzahl ist dabei vorzugsweise kleiner als die Sekundärwicklungsanzahl, wobei die Sekundärwicklungsanzahl beispielsweise fünf bis zehn, besonders bevorzugt sieben, beträgt und/oder die Messwicklungsanzahl vorzugsweise maximal zwei beträgt, insbesondere eins. In vorteilhafter Weise ist am Spulenkern der Spulenanordnung auch eine Primärwicklung mit einer Primärwicklungsanzahl angeordnet, wobei die Primärwicklungsanzahl kleiner ist als die Sekundärwicklungsanzahl und größer oder gleich der Messwicklungsanzahl ist, wobei die Primärwicklungsanzahl vorzugsweise zwei bis vier beträgt, insbesondere zwei. Dadurch wird ein konstruktiver Aufbau der Zündeinrichtung bereitgestellt, in dem ein vorteilhaftes Verhältnis zwischen den Wicklungsanzahlen festgelegt ist.

Die Steuerungseinheit vorzugsweise dazu ausgebildet, ein Übersetzungsverhältnis zwischen der Sekundärwicklungsanzahl und der Messwicklungsanzahl als Proportionalitätsfaktor zur Ermittlung des Spannungsabfalls der Sekundärwicklung zu verwenden. Dadurch kann die WIG-Lichtbogenspannung in Abhängigkeit des konstruktiven Aufbaus der Zündeinrichtung ermittelt werden.

Es kann weiters vorteilhaft sein, wenn die Schweißvorrichtung zur Durchführung eines MSG-Schweißprozesses ausgebildet ist, wobei der erste Pol der Schweißstromquelle mit einem, eine abschmelzende Elektrode umfassenden, MSG-Schweißbrenner verbunden oder verbindbar ist, vorzugsweise über eine dritte Anschlussbuchse. Dadurch kann mit der Schweißvorrichtung neben einem WIG-Schweißprozess auch ein MIG/MAG-Schweißprozess durchgeführt werden. Es wird damit ein sehr flexibel einsetzbare Schweißvorrichtung geschaffen.

In der Steuerungseinheit kann in vorteilhafter Weise auch eine analoge oder digitale Messschaltung zur Ermittlung der WIG-Lichtbogenspannung vorgesehen sein, wobei in der Messschaltung vorzugsweise ein Filter zur Filterung zumindest eines Spannungssignals vorgesehen ist. Durch die erfindungsgemäße Ermittlung der WIG-Lichtbogenspannung anhand der relativ geringen Messwicklungsspannung, kann die Messschaltung für ein geringeres Spannungspotential ausgelegt werden. Dadurch kann die Messschaltung einfacher ausgeführt werden und aufgrund des geringeren erforderlichen Messbereichs kann eine genauere Ermittlung der Messwicklungsspannung und folglich der der WIG-Lichtbogenspannung erfolgen.

Es kann weiters vorteilhaft sein, wenn in der Steuerungseinheit ein Schweißstromkreismodell hinterlegt ist, das ein Modell der WIG-Schweißleitung und/oder ein Modell einer MSG-Schweißleitung und/oder ein Modell einer Masseleitung und/oder ein Modell des Werkstücks enthält und dass die Steuerungseinheit dazu ausgebildet ist, mittels des Schweißstromkreismodells einen Spannungsabfall in der WIG-Schweißleitung und/oder in der MSG-Schweißleitung und/oder in der Masseleitung und/oder am Werkstück zu ermitteln und den ermittelten Spannungsabfall bei der Ermittlung der WIG-Lichtbogenspannung zu berücksichtigen, wobei das Modell der WIG-Schweißleitung und/oder das Modell der MSG-Schweißleitung vorzugsweise zumindest einen Ohm'schen Widerstand und zumindest eine Induktivität enthält. Dadurch kann die interessierende WIG-Lichtbogenspannung noch genauer ermittelt werden, weil allfällige Spannungsabfälle berücksichtigt werden.

Es kann vorteilhaft sein, wenn in der Schweißvorrichtung eine zusätzliche Hilfsenergiequelle zur Erzeugung einer Hilfsspannung zum Wiederzünden des WIG-Lichtbogens während des durchgeführten WIG-Schweißprozesses, insbesondere AC-Schweißprozesses, vorgesehen ist und dass die Steuerungseinheit dazu ausgebildet ist, das Wiederzünden des WIG-Lichtbogens anhand der ermittelten WIG-Lichtbogenspannung zu detektieren und bei Detektion des WIG-Lichtbogens die Hilfsenergiequelle zu deaktivieren, wobei die Detektion des Wiederzündens des WIG-Lichtbogens vorzugsweise anhand eines vorgegebenen Spannungsschwellwerts erfolgt. Dadurch kann die erfindungsgemäß ermittelte WIG-Lichtbogenspannung in vorteilhafter Weise als Indikator zur Erkennung des WIG-Lichtbogens verwendet werden und in Folge zur Deaktivierung der Hilfsenergiequelle. Dadurch kann beim Umpolvorgang während eines AC-Schweißprozesses ein unerwünschtes Überschwingen des Schweißstroms verhindert werden, wodurch unangenehme laute Geräusche vermieden werden können.

Die Aufgabe wird weiters mit einem Verfahren gemäß Anspruch 11 gelöst. Vorteilhafte Ausführungsformen des Verfahrens sind in den abhängigen Ansprüchen 12 bis 15 angegeben.

Die gegenständliche Erfindung wird nachfolgend unter Bezugnahme auf die Figuren 1 bis 8 näher erläutert, die beispielhaft, schematisch und nicht einschränkend vorteilhafte Ausgestaltungen der Erfindung zeigen. Dabei zeigt

Fig.1 eine Schweißvorrichtung zur Durchführung eines WIG-Schweißprozesses an einem Werkstück,

Fig.2 eine schematische Darstellung einer Zündeinrichtung,

Fig.3 eine beispielhafte UI-Kennlinie einer Sekundärwicklung der Zündeinrichtung,

Fig.4 ein elektrisches Ersatzschaltbild eines Schweißstromkreises der Schweißvorrichtung aus Fig.1,

Fig.5 einen zeitlichen Verlauf von elektrischen Schweißparametern während eines Umpolvorgangs eines Wechselstrom-Schweißprozesses,

Fig.6 eine beispielhafte Strom-Spannungs-Kennlinie einer Hilfsenergiequelle,

Fig.7 einen zeitlichen Verlauf von elektrischen Schweißparametern während einer Wiederzündung eines WIG-Lichtbogens während eines Wechselstrom-Schweißprozesses unter Verwendung einer Hilfsenergiequelle gemäß dem Stand der Technik,

Fig.8 einen zeitlichen Verlauf von elektrischen Schweißparametern während einer Wiederzündung eines WIG-Lichtbogens während eines Wechselstrom-Schweißprozesses unter Verwendung einer Hilfsenergiequelle gemäß der Erfindung.

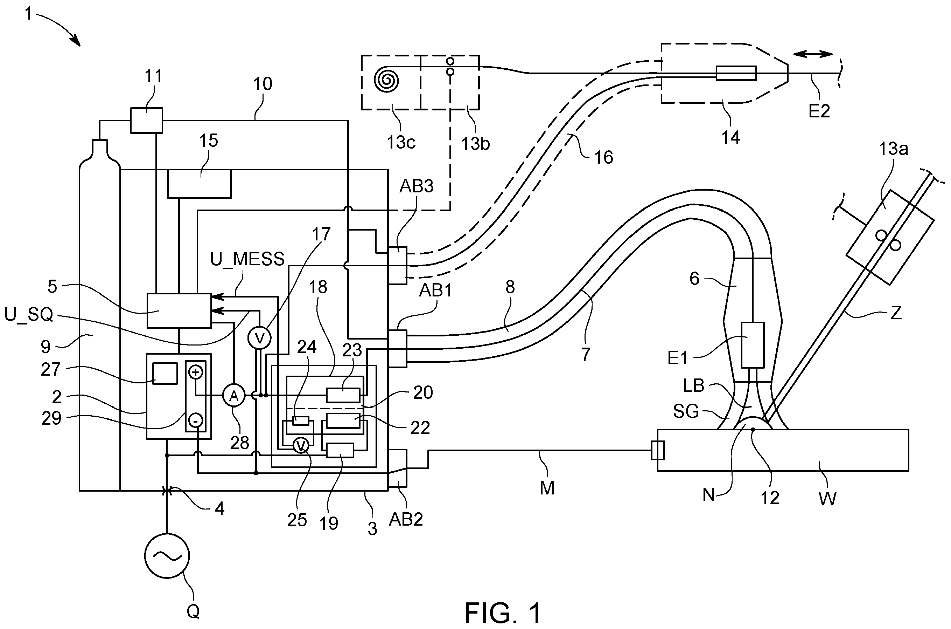

In Fig.1 ist eine erfindungsgemäße Schweißvorrichtung 1 zur Durchführung eines Schweißprozesses in einer beispielhaften Ausführung dargestellt. Die dargestellte Schweißvorrichtung 1 ist zumindest zur Durchführung eines Schweißprozesses mit einer nicht-abschmelzenden Elektrode ausgebildet, also dem bekannten WIG-Schweißen (WIG=Wolfram Inertgas), wobei als nicht-abschmelzende Elektrode eine sogenannten Wolfram-Elektrode E1 oder auch WIG-Elektrode E1 verwendet wird. Optional könnte die Vorrichtung 1 aber zusätzlich auch zur Durchführung eines MIG/MAG-Schweißprozesses bzw. allgemein Metall-Schutzgas-Schweißen (MSG) mit einer abschmelzenden MSG-Elektrode E2 in Form eines Schweißdrahts ausgebildet sein, wie in Fig.1 gestrichelt angedeutet ist. Somit kann mit der Schweißvorrichtung 1 entweder ein MIG/MAG-Schweißprozess oder ein WIG-Schweißprozess durchgeführt werden, wobei die beiden unterschiedlichen Schweißprozesse in der Regel nicht gleichzeitig stattfinden. Die WIG-Elektrode E1 ist an einem WIG-Schweißbrenner 6 angeordnet und die optionale MSG-Elektrode E2 (der Schweißdraht) ist an einem MSG-Schweißbrenner 14 angeordnet. Die dargestellte Schweißvorrichtung 1 ist zur Durchführung eines manuellen Schweißvorgangs ausgebildet, bei dem der WIG-Schweißbrenner 6 (oder der MSG-Schweißbrenner 14) per Hand von einem Schweißer geführt wird. Natürlich könnte aber auch ein (nicht dargestellter) Schweißroboter vorgesehen sein, mit dem der WIG-Schweißbrenner 6 und/oder der MSG-Schweißbrenner 14 automatisiert gemäß einem vorgegebenen Bewegungsablauf bewegt werden kann. Die Verwendung eines Schweißroboters ist bekannt, weshalb nachfolgend nicht mehr näher darauf eingegangen wird. Der Kern der Erfindung betrifft das WIG-Schweißen, weshalb nachfolgend nur am Rande auf das MSG-Schweißen Bezug genommen wird.

Die dargestellte Schweißvorrichtung 1 weist in bekannter Weise eine Schweißstromquelle 2 auf, die beispielsweise innerhalb eines mobilen oder stationären Schweißgeräts 3 vorgesehen sein kann. Die Schweißstromquelle 2 kann über einen geeigneten elektrischen Anschluss 4 von einer Energiequelle Q, beispielsweise einem 3-Phasen Wechselstromanschluss, mit der nötigen Energie versorgt werden. Die Schweißstromquelle 2 weist in bekannter Weise einen ersten Pol P1 und einen zweiten Pol P2 auf. Der erste Pol P1 ist mit einer ersten Anschlussbuchse AB1 elektrisch verbunden und der zweite Pol P2 ist mit einer zweiten Anschlussbuchse AB2 elektrisch verbunden. An die erste Anschlussbuchse AB1 kann der WIG-Schweißbrenner 6, der die WIG-Elektrode E1 umfasst, mittels einer Schweißleitung 7 angeschlossen werden. Die zweite Anschlussbuchse AB2 kann über einer Masseleitung M mit dem Werkstück W verbunden werden, an dem der Schweißprozess durchgeführt werden soll.

Wenn die Schweißvorrichtung 1 zusätzlich auch zur Durchführung eines MSG-Schweißprozesses ausgebildet ist, dann ist vorzugsweise, analog zur ersten Anschlussbuchse AB1 für den WIG-Schweißbrenner 6, auch eine dritte Anschlussbuchse AB3 zum Anschließen eines MSG-Schweißbrenners 14 vorgesehen. Die dritte Anschlussbuchse AB3 ist in Fig.1 z.B. am Schweißgerät 3 angeordnet. Unter den Anschlussbuchsen AB1, AB2, AB3 ist im Rahmen der Erfindung sowohl eine lösbare Verbindung, als auch eine fixe, also nicht lösbare Anbindung zu verstehen. In der Regel werden als Anschlussbuchsen AB1, AB2, AB3 aber lösbare, vorzugsweise genormte Kupplungen verwendet.

Üblicherweise ist der erste Pol P1 der Schweißstromquelle 2 als Pluspol ausgebildet und der zweite Pol P2 der Schweißstromquelle 2 ist als Minuspol ausgebildet, wie in Fig.1 durch das Plus-Symbol und das Minus-Symbol angedeutet ist. Grundsätzlich wäre aber auch eine umgekehrte Polung oder eine Umpolung der Pole P1, P2 durch die Schweißstromquelle 8 im Betrieb der Schweißvorrichtung 1 möglich. Über die Schweißleitung 7 versorgt die Schweißstromquelle 2 den WIG-Schweißbrenner 6 und die daran vorgesehene WIG-Elektrode E1 in bekannter Weise mit dem für den Schweißprozess benötigten Schweißstrom I. Bekanntermaßen kann die Schweißleitung 7 auch in einem Schlauchpaket 8 geführt sein, in welchem neben der Schweißleitung 7 auch noch weitere Leitungen und bzw. oder Rohrleitungen und bzw. oder Schläuche vorgesehen sein können, welche für den Schweißprozess notwendig oder vorteilhaft sind.

Um einen WIG-Schweißprozess durchzuführen wird dem Werkstück W mittels der Masseleitung M ein erstes elektrisches Potential (üblicherweise der Pluspol beim DC-WIG-Schweißen) angelegt und über die Schweißleitung 7 wird an die WIG-Elektrode E1 ein zweites elektrisches Potential (üblicherweise der Minuspol beim DC-WIG-Schweißen) angelegt. Hingegen wechseln beim AC-WIG-Schweißen die Polaritäten, je nach Frequenz des Schweißstroms, sowohl am Werkstück, als auch an der Elektrode E1. Der Wechsel der Polaritäten erfolgt mittels Halbleitertechnik in einem Wechselrichter 29. Bei einem Umpolvorgang (Wechsel der Polaritäten) kommt es zu einem kurzzeitigen Erlöschen des Lichtbogens während des Nulldurchgangs (Schweißstrom I=0). Um eine Wiederzündung des Lichtbogens beim AC-WIG-Schweißen zu ermöglichen, wird zwischen dem Werkstück und der Elektrode E1, mit Hilfe einer Hilfsspannungsquelle 27, eine zusätzliche Spannung angelegt. Eine derartige zusätzliche Hilfsspannung liegt in der Regel zwischen 90 V bis 500 V. Nach dem Zünden eines Lichtbogens LB_WIG zwischen dem freien Ende der WIG-Elektrode E1 und einer Schweißstelle 12 am Werkstück W wird ein Schweißstromkreis geschlossen und es fließt ein Schweißstrom I. Aufgrund der nicht-abschmelzenden Elektrode E1 kann es zur Durchführung eines WIG-Schweißprozesses (im Gegensatz zum MIG/MAG-Schweißen mit abschmelzender Elektrode E2) weiters erforderlich sein, dass der Schweißstelle 12 zusätzlich ein separater Zusatzstoff Z zugeführt wird. Dieser Zusatzwerkstoff kann sowohl per Hand, als auch mechanisiert, über eine Vorschubeinheit 13a, zugeführt werden. Durch den Lichtbogen LB_WIG werden der Zusatzstoff Z und ein Teil des Werkstücks W aufgeschmolzen, wodurch eine Schweißnaht N gebildet wird.

Meist wird zur Durchführung eines Schweißprozesses auch ein (aktives oder inertes) Schutzgas SG verwendet, um das Schmelzbad von der Umgebung abzuschirmen und dadurch eine Oxidation zu verhindern. Das Schutzgas SG kann dem WIG-Schweißbrenner 6 (und optional dem MSG-Schweißbrenner 14) beispielsweise von einem geeigneten Schutzgasbehälter 9 über eine geeignete Schutzgasleitung 10 zugeführt werden, die beispielsweise ebenfalls im Schlauchpaket 8 zum WIG-Schweißbrenner 6 geführt sein kann (oder in einem Schlauchpaket 16 zum MSG-Schweißbrenner 14). Natürlich wäre aber auch eine separate Zuführung des Schutzgases SG möglich. Es kann dabei auch ein Druckregler 11, beispielsweise in Form einer am Schutzgasbehälter angeordneten Flaschenarmatur, vorgesehen sein, um den Durchfluss des Schutzgases SG zu steuern. Weiters kann über das Schlauchpaket 8 gegebenenfalls auch ein Kühlmedium zum Kühlen des WIG-Schweißbrenners 6 zugeführt werden (und über das Schlauchpaket 16 kann gegebenenfalls auch ein Kühlmedium zum Kühlen des MSG-Schweißbrenners 14 zugeführt werden).

In der Schweißvorrichtung 1 ist weiters eine Steuerungseinheit 5 vorgesehen, die z.B. als geeignete Hard- und/oder Software ausgebildet sein kann. Die Steuerungseinheit 5 ist mit der Schweißstromquelle 2 verbunden und ist dazu ausgebildet, die Schweißstromquelle 2 anzusteuern, um einen gewünschten Schweißprozess durchzuführen. Während des Schweißprozesses steuert die Steuerungseinheit 5 die Schweißstromquelle 2, um bestimmte Schweißparameter einzustellen, beispielsweise elektrische Schweißparameter wie eine Schweißspannung U, einen Schweißstrom I, eine Frequenz f des Schweißstroms I, usw. Zusätzlich kann die Steuerungseinheit 5 ggf. auch weitere verfügbare Einheiten der Schweißvorrichtung 1 ansteuern, um nicht-elektrische Schweißparameter einzustellen. Beispielsweise kann die Steuerungseinheit 5 den Druckregler 11 des Schutzgasbehälters 9 ansteuern, um eine zur Schweißstelle 12 zugeführte Schutzgasmenge zu steuern oder zu regeln.

Die Steuerungseinheit 5 könnte auch eine optionale Vorschubeinheit 13a für den Zusatzstoff Z ansteuern, um eine Vorschubgeschwindigkeit des Zusatzstoffs Z zu steuern oder zu regeln. Die Steuerungseinheit 5 könnte auch eine Vorschubeinheit 13b eines optional verfügbaren MSG-Schweißbrenners 14 ansteuern, um eine Vorschubgeschwindigkeit der abschmelzenden Elektrode E2 (des Schweißdrahts) zu steuern oder zu regeln. Der Schweißdraht kann der Vorschubeinheit 13a/13b in bekannter Weise z.B. aus einem Drahtspeicher 13c zugeführt werden. Die Vorschubeinheit 13a/13b inkl. Drahtspeicher 13c sind in Fig.1 hier beispielhaft als separate Einheiten dargestellt, natürlich könnten sie aber auch Teil des Schweißgeräts 3 sein. Die einzustellenden Schweißparameter hängen im Wesentlichen vom durchzuführenden Schweißprozess ab können allgemein als bekannt angesehen werden. Je nach durchgeführtem Schweißprozess können die Schweißparameter natürlich qualitativ und quantitativ variieren. Die Steuerungseinheit 5 kann z.B. einen zeitlichen Verlauf verschiedener Schweißparameter (z.B. Schweißstrom I, Schweißspannung U, Frequenz f des Schweißstroms I usw.) entsprechend eines vorgegebenen Schweißprozesses einstellen. Dazu kann die Steuerungseinheit 5 z.B. auch einen oder mehrere geeignete Regler aufweisen, um einen oder mehrere Schweißparameter auf einen vorgegebenen Sollwert zu regeln.

In der Schweißvorrichtung 1, beispielsweise am Schweißgerät 3, kann auch eine Benutzerschnittstelle 15 vorgesehen sein, die in geeigneter Weise mit der Steuerungseinheit 5 kommuniziert. Über die Benutzerschnittstelle 15 kann ein Benutzer bestimmte Einstellungen vornehmen. Beispielsweise kann ein bestimmter Schweißprozess ausgewählt werden und es können bestimmte Schweißparameter gewählt und/oder eingestellt werden.

Es können beispielsweise auch vordefinierte Schweißprogramme mit bestimmten voreingestellten Schweißparametern in der Steuerungseinheit 5 hinterlegt sein, welche vom Benutzer über die Benutzerschnittstelle 15 ausgewählt werden können. Wenn in der Schweißvorrichtung 1 ein Schweißroboter vorgesehen ist, dann kann die Steuerungseinheit 5 z.B. in geeigneter Weise mit einer Roboter-Steuerungseinheit kommunizieren, um den Schweißprozess und die Bewegung des WIG-Schweißbrenners 6 (oder MSG-Schweißbrenners 14) zu synchronisieren. Die Kommunikation kann beispielsweise auch über eine übergeordnete (nicht gezeigte) Steuerungseinheit erfolgen.

In der Schweißvorrichtung 1, hier im Schweißgerät 3, ist weiters eine erste Spannungsmesseinrichtung 17 zur Erfassung einer Stromquellenspannung U_SQ zwischen dem ersten Pol P1 und dem zweiten Pol P2 der Schweißstromquelle 2 vorgesehen. Die erste Spannungsmesseinrichtung 17 kann als separate Einheit, z.B. in Form eines Voltmeters, ausgebildet sein, wie in Fig.1 dargestellt ist, könnte aber auch in geeigneter Weise der Steuerungseinheit 5 integriert sein. Die Steuerungseinheit 5 ist dazu ausgebildet, die Stromquellenspannung U_SQ zur Steuerung oder Regelung des Schweißprozesses zu verwenden. Die Steuerungseinheit 5 kann z.B. in Abhängigkeit der erhaltenen Stromquellenspannung U_SQ einen oder mehrere Steuerungsparameter berechnen und die Schweißstromquelle 2 mit dem/den Steuerungsparametern steuern.

Bisher hat die Steuerungseinheit 5 die Stromquellenspannung U_SQ z.B. näherungsweise als Maß für eine interessierende Lichtbogenspannung U_LB am Lichtbogen LB_WIG (zwischen WIG-Elektrode E1 und Schweißstelle 12) verwendet und z.B. als Istwert zur Regelung der Lichtbogenspannung U_LB herangezogen. Als Sollwert kann z.B. eine entsprechend eines gewünschten Schweißprozesses vorgegebene Schweißspannung U oder ein zeitlicher Verlauf einer Schweißspannung U verwendet werden. Ein geeigneter Regler der Steuerungseinheit 5 kann aus dem Istwert und dem Sollwert entsprechend eines bestimmten Regelgesetzes eine Stellgröße als Steuerungsparameter berechnen. Die Steuerungseinheit 5 kann dann die Schweißstromquelle 2 mit der ermittelten Stellgröße ansteuern, beispielsweise um den Sollwert der Schweißspannung U und/oder dem Schweißstrom I und/oder von daraus abgeleiteten Größen einzustellen.

In der Schweißvorrichtung 1 ist weiters eine (Hochfrequenz-)Zündeinrichtung 18 zur Erzeugung einer Zündspannung U_Z zum berührungslosen Zünden des Lichtbogens LB_WIG zwischen der nicht-abschmelzenden Elektrode E1 und dem Werkstück W vorgesehen. Unter dem Zünden ist dabei auch eine Wiederzündung während des Schweißprozesses zu verstehen. Die Zündeinrichtung 18 ist in der Leitung zwischen dem ersten Pol P1 der Schweißstromquelle 2 und dem WIG-Schweißbrenner 6 bzw. der WIG-Elektrode E1 angeordnet. Im dargestellten Beispiel ist die Zündeinrichtung 18 im Schweißgerät 3 zwischen der Schweißstromquelle 2 und der ersten Anschlussbuchse AB1 **angeordnet.** Grundsätzlich könnte die Zündeinrichtung 18 aber auch zwischen der ersten Anschlussbuchse AB1 und dem WIG-Schweißbrenner 6 angeordnet sein, also außerhalb des Schweißgeräts 3. In diesem Fall könnte die erste Spannungsmesseinrichtung 17 die Stromquellenspannung U_SQ auch direkt zwischen der ersten Anschlussbuchse AB1 und der zweiten Anschlussbuchse AB2 erfassen.

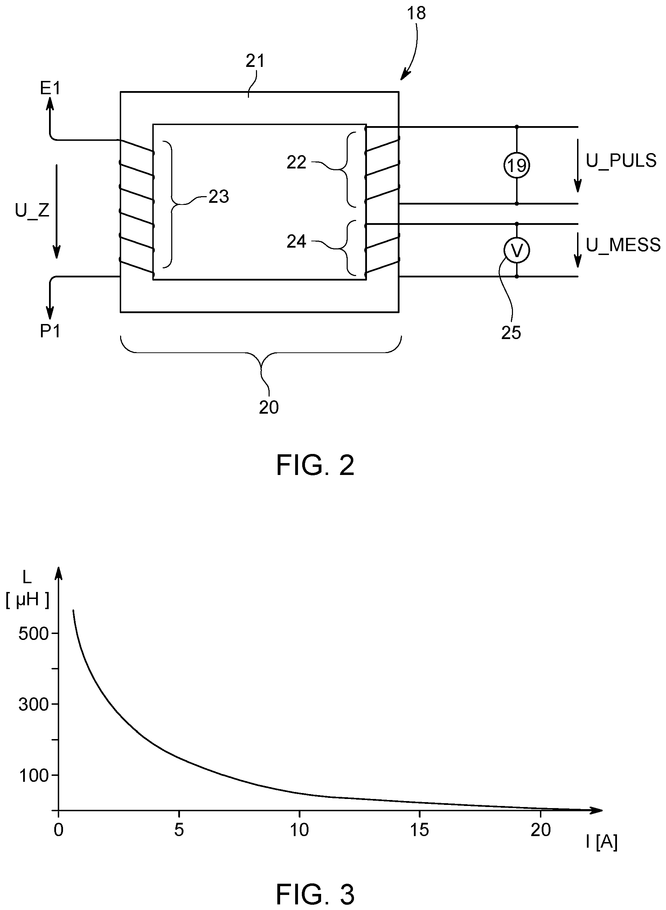

In Fig.2 ist die Zündeinrichtung 18 vereinfacht dargestellt. In der Zündeinrichtung 18 ist eine Spulenanordnung 20 mit einem Spulenkern 21 vorgesehen, an dem eine Primärwicklung 22, eine Sekundärwicklung 23 und gemäß einer bevorzugten Ausführungsform der Erfindung eine zusätzliche Messwicklung 24 angeordnet sind. Die Primärwicklung 22 ist vorzugsweise mit einer separaten Zündspannungsquelle 19 verbunden, die beispielsweise von der in Fig.1 dargestellten Energiequelle Q mit der nötigen Energie versorgt werden kann. Weiters ist gemäß der Erfindung eine zweite Spannungsmesseinrichtung 25 zur Erfassung einer Messwicklungsspannung U_MESS an der Messwicklung 24 vorgesehen. Die Sekundärwicklung 23 ist in der Leitung zwischen dem ersten Pol P1 der Schweißstromquelle 2 und der WIG-Elektrode E1 angeordnet, in Fig.1 z.B. zwischen dem ersten Pol P1 und der ersten Anschlussbuchse AB1. Die Primärwicklung 22 hat eine festgelegte Primärwicklungsanzahl N1 und die Sekundärwicklung 23 hat eine festgelegte Sekundärwicklungsanzahl N2, die größer oder gleich der Primärwicklungsanzahl N1 ist. Die nachfolgend noch näher beschriebene Messwicklung 24 hat eine festgelegte Messwicklungsanzahl N_MESS, die kleiner oder gleich der Primärwicklungsanzahl N1 ist.

Die Spulenanordnung 20 hat somit die Funktion eines Transformators. Wenn von der Zündspannungsquelle 19 an die Primärwicklung 22 eine Pulsspannung U_PULS angelegt wird, wird ein magnetischer Fluss im gemeinsamen Spulenkern 21 erzeugt. Der zeitlich veränderliche magnetische Fluss induziert eine Zündspannung U_Z in der Sekundärwicklung 23, die proportional zur Sekundärwicklungsanzahl N2 der Sekundärwicklung 23 ist. Folglich entspricht ein Verhältnis zwischen der Zündspannung U_Z und der Pulsspannung U_PULS in etwa einem Verhältnis zwischen der Sekundärwicklungsanzahl N2 und der Primärwicklungsanzahl N1, also $\dfrac{U\_Z}{U\_PULS} = \dfrac{N2}{N1}$ . In analoger Weise wird in der Messwicklung 24 eine Messwicklungsspannung U_MESS induziert, die proportional zur Sekundärwicklungsanzahl N2 der Sekundärwicklung ist und proportional zur Primärwicklungsanzahl N1 der Primärwicklung 22 ist. Folglich entspricht ein Verhältnis zwischen der Zündspannung U_Z und der Messwicklungsspannung U_MESS in etwa einem Verhältnis zwischen der Sekundärwicklungsanzahl N2 und der Messwicklungsanzahl N_MESS, also

$$\frac{U\_Z}{U\_MESS} = \frac{N2}{N\_MESS}.$$

Die Zündspannung U_Z wird in die Schweißleitung 7 eingekoppelt wodurch das Gas zwischen der WIG-Elektrode E1 und dem Werkstück W ionisiert und ein Lichtbogen LB_WIG gezündet wird. Zur Ionisierung der Gasstrecke muss, je nach Abstand zwischen der WIG-Elektrode E1 und dem Werkstück W, bekanntermaßen eine elektrische Hochspannung im Bereich von beispielsweise 5 kV bis 15 kV erzeugt werden. Nach dem Zünden des Lichtbogens wird die Zündspannung U_Z wieder weggenommen und der Schweißprozess gestartet bzw. fortgesetzt. Gemäß einer vorteilhaften Auslegung der Zündeinrichtung 18 beträgt die Sekundärwicklungsanzahl N2 z.B. fünf bis zehn, vorzugsweise sieben, die Primärwicklungsanzahl N1 beträgt z.B. zwei bis vier, vorzugsweise zwei und die Messwicklungsanzahl N_MESS beträgt maximal zwei, vorzugsweise eins. Bei einer Pulsspannung U_PULS = 2600V, einer Sekundärwicklungsanzahl N2=7, einer Primärwicklungsanzahl N1=2 und einer Messwicklungsanzahl N_MESS=1 kann beispielsweise eine Zündspannung U_Z=9100V erzeugt werden und eine Messwicklungsspannung U_MESS beträgt entsprechend dem obigen Zusammenhang U_MESS=1300V. Die Zündeinrichtung 18, insbesondere die Sekundärwicklung 23, wirkt in Richtung der Schweißstromquelle 2 als Sperrdrossel, sodass die hohe Zündspannung U_Z die empfindliche Leistungselektronik und die Sensorik (z.B. die erste Spannungsmesseinrichtung 17) nicht beschädigen kann.

Aufgrund der eingangs erwähnten Problematik bzgl. des Spannungsabfalls an der Zündeinrichtung 18, insbesondere der Sekundärwicklung 23, führte die Verwendung der Stromquellenspannung U_SQ zur Regelung des Schweißprozesses bisher zu unbefriedigenden Ergebnissen. Wie eingangs erwähnt, ist dies auf die nicht-lineare Induktivitäts-Kennlinie der Zündeinrichtung 18, insbesondere der Sekundärwicklung 23, zurückzuführen. Zur Veranschaulichung ist in Fig.3 eine beispielhafte Kennlinie dargestellt. Dabei ist die differentielle Induktivität L der Sekundärspule 23 über dem Strom I aufgetragen. Es ist ersichtlich, dass die Induktivität L bei einem relativ kleinen Strom I von beispielsweise 1-3 Ampere relativ hohe Werte im Bereich von 200-über 500 $\mu$H annimmt und dass sich die Induktivität bei höheren Strömen zu sättigen beginnt. Daraus folgt, dass bei geringen (Schweiß-)strömen I in der WIG-Schweißleitung 7 ein relativ hoher Spannungsabfall an der Sekundärwicklung 23 auftritt. Das führt dazu, dass die von der ersten Spannungsmesseinrichtung 17 erfasste Stromquellenspannung U_SQ unter Umständen stark von der tatsächlichen Lichtbogenspannung U_LB am Lichtbogen LB_WIG abweicht, was sich negativ auf die Regelung des Schweißprozesses auswirkt.

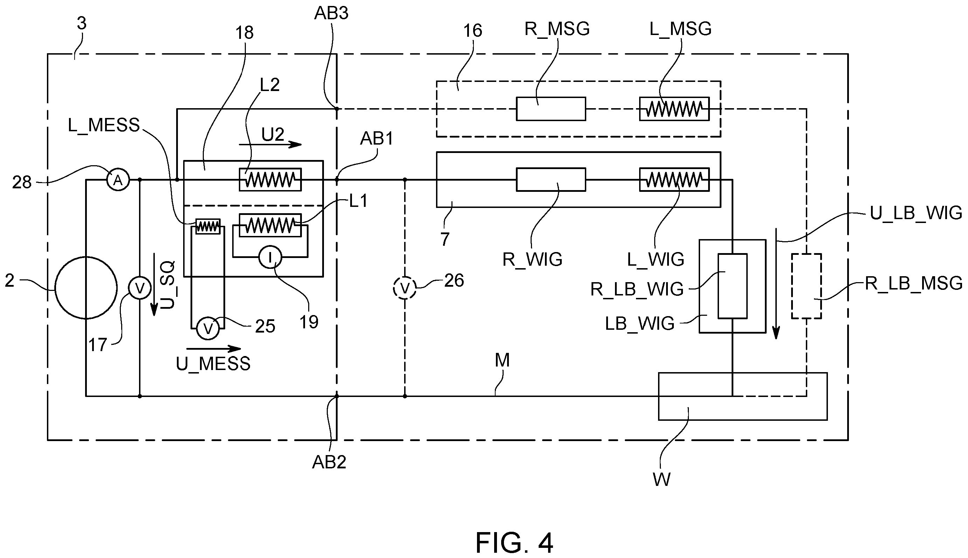

In Fig.4 ist ein Ersatzschaltbild des Schweißstromkreises der Schweißvorrichtung 1 aus Fig.1 dargestellt. Die Schweißstromquelle 2 kann hierbei noch eine Hilfsspannungsquelle 27 und einen Wechselrichter 29 beinhalten (nicht dargestellt). Die Primärwicklung 22 der Zündeinrichtung 18 ist hier als Induktivität L1 dargestellt, die Sekundärwicklung 23 der als Induktivität L2 und die Messwicklung 24 ist als Induktivität L_MESS. Die WIG-Schweißleitung 7 ist durch einen Ohm'schen Widerstand R_WIG und eine Induktivität L_WIG modelliert. Der WIG-Lichtbogen LB_WIG ist ebenfalls durch einen Ohm'schen Widerstand R_LB_WIG modelliert. Die optionale MSG-Schweißleitung 16 ist durch einen Ohm'schen Widerstand R_MSG und eine Induktivität L_MSG modelliert und der MSG-Lichtbogen LB_MSG ist ebenfalls durch einen Ohm'schen Widerstand R_LB_MSG modelliert.

Anhand der Position der ersten Spannungsmesseinrichtung 17 in Fig.4 ist zu erkennen, dass die erfasste Stromquellenspannung U_SQ nicht nur einen Spannungsabfall der WIG-Schweißleitung 7 enthält, sondern insbesondere auch einen Spannungsabfall der Sekundärwicklung 23 der Zündeinrichtung 18, hier der Induktivität L2. Für eine möglichst genaue Regelung des Schweißprozesses ist allerdings die Lichtbogenspannung U_LB_WIG am Lichtbogen LB interessant. Es ist somit ersichtlich, dass die Verwendung der Stromquellenspannung U_SQ zur Regelung des Schweißprozesses unter Umständen unbefriedigende Ergebnisse liefert.

Um dies zu umgehen, könnte die Lichtbogenspannung U_LB_WIG zwar grundsätzlich näher am WIG-Lichtbogen LB_WIG gemessen werden, beispielsweise erst nach der Zündeinrichtung 18, wie in Fig.4 anhand der gestrichelten Spannungsmessungseinheit 26 angedeutet ist. Eine direkte Messung der Lichtbogenspannung U_LB_WIG ist allerdings nicht ohne weiteres möglich, da herkömmliche Messschaltungen nicht für hohe Spannungen im Bereich der Zündspannung U_Z ausgelegt sind. Zum einen können derart hohe Spannungen zu einer Beschädigung der Messschaltung führen. Zum anderen wäre eine möglichst genaue Messung der Lichtbogenspannung U_LB_WIG während eines Schweißprozesses (d.h. nach bereits erfolgter Zündung), die im Bereich einiger hundert Volt liegen kann, nicht möglich, weil der Messbereich für die Zündspannung U_Z ausgelegt sein muss, die wie erwähnt im Bereich einiger kV liegt.

Gemäß einer bevorzugten Ausführungsform der Erfindung ist daher vorgesehen, dass mittels der zweiten Spannungsmesseinrichtung 25 eine Messwicklungsspannung U_MESS an der Messwicklung 24 ermittelt wird und dass die Steuerungseinheit 5, die Stromquellenspannung U_SQ und die Messwicklungsspannung U_MESS zur Ermittlung der Lichtbogenspannung U_LB_WIG des Lichtbogens LB_WIG verwendet. Die ermittelte Lichtbogenspannung U_LB_WIG kann von der Steuerungseinheit 5 somit anstatt der Stromquellenspannung U_SQ zur Steuerung des Schweißprozesses verwendet werden. Gemäß einer alternativen Ausführungsform der Erfindung ist vorgesehen, dass anstelle der in der Zündeinrichtung 18 angeordneten Messwicklung 24 eine Messwicklungssimulationseinrichtung zur Simulation einer virtuellen Messwicklung 24 in der Schweißvorrichtung 1 vorgesehen ist (in den Figuren nicht dargestellt). In diesem Fall kann auf die zweite Spannungsmesseinrichtung 25 verzichtet werden und die Messwicklungsspannung U_MESS an der virtuellen Messwicklung 24 kann von der Messwicklungssimulationseinrichtung ermittelt werden. Die Steuerungseinheit 5 kann dann die Stromquellenspannung U_SQ und die simulierte Messwicklungsspannung U_MESS zur Ermittlung der Lichtbogenspannung U_LB_WIG des Lichtbogens LB_WIG heranziehen.

Die Messwicklungssimulationseinrichtung ist dazu ausgebildet, die physisch nicht vorhandene "reale" Messwicklung 24 durch eine virtuelle Messwicklung 24 zu simulieren und aus der Simulation die Messwicklungsspannung U_MESS an der virtuellen Messwicklung 24 zu ermitteln. Die Simulation erfolgt dabei vorzugsweise auf Basis des Stromflusses durch die Sekundärwicklung 23. Die Messwicklungssimulationseinrichtung kann in einer einfachen Ausgestaltung beispielsweise eine Kennlinie enthalten, in der die Messwicklungsspannung U_MESS in Abhängigkeit des Stroms an der Sekundärwicklung 23 abgebildet ist. Die Messwicklungssimulationseinrichtung könnte aber auch ein Kennfeld enthalten, in dem die Messwicklungsspannung U_MESS in Abhängigkeit des Stroms an der Sekundärwicklung 23 und einer weiteren Eingangsgröße abgebildet ist. Die Kennlinie oder das Kennfeld können beispielsweise in Form einer LookUp-Tabelle in der Steuerungseinheit 5 implementiert sein. Die Kennlinie oder das Kennfeld könnten beispielsweise aus zuvor durchgeführten Messungen an einer, eine "reale" Messwicklung 24 umfassenden, realen Zündvorrichtung 18 ermittelt werden. Die Messwicklungssimulationseinrichtung könnte aber auch ein physikalisches Modell der "realen" Messwicklung 24 enthalten, um die Messwicklungsspannung U_MESS anhand physikalischer Zusammenhänge analytisch zu ermitteln.

Natürlich könnte die Messwicklungssimulationseinrichtung aber auch zusätzlich zur "realen" Messwicklung 24 und der zweiten Spannungsmesseinrichtung 25 vorgesehen sein. Dadurch kann beispielsweise die von der zweiten Spannungsmesseinrichtung 25 erfasste Messwicklungsspannung U_MESS plausibilisiert werden oder eine redundante Ermittlung der Messwicklungsspannung U_MESS erfolgen. Die Messwicklungssimulationseinrichtung kann beispielsweise als separate Hard- und/oder Software in der Schweißvorrichtung 1 integriert sein und in geeigneter Weise mit der Steuerungseinheit 5 kommunizieren. Vorzugsweise ist die Messwicklungssimulationseinrichtung aber in der Steuerungseinheit 5 integriert.

Vorzugsweise wird dabei von der Steuerungseinheit 5 aus der von der zweiten Spannungsmesseinrichtung 25 erfassten oder von der Messwicklungssimulationseinrichtung simulierten Messwicklungsspannung U_MESS und einem festgelegten Proportionalitätsfaktor $\varphi$ ein Spannungsabfall der Zündeinrichtung 18, insbesondere ein Spannungsabfall U2 an der Sekundärspule 23, ermittelt und die Lichtbogenspannung U_LB_WIG am WIG-Lichtbogen LB_WIG wird aus einer Differenz zwischen der Stromquellenspannung U_SQ und dem Spannungsabfall U2 ermittelt gemäß

$$U\_LB\_WIG = U\_SQ - U2 \text{ mit } U2 = U\_MESS * \varphi.$$

**Wie bereits** ausgeführt unterscheiden sich die Primärwicklungsanzahl N1 der Primärwicklung 22, die Sekundärwicklungsanzahl N2 der Sekundärwicklung 23 und die Messwicklungsanzahl N_MESS der Messwicklung 24 voneinander, wobei die Messwicklungsanzahl N_MESS vorzugsweise kleiner ist als die Primärwicklungsanzahl N1 und die Primärwicklungsanzahl N1 kleiner ist als die Sekundärwicklungsanzahl N2. In einer vorteilhaften Ausführungsform beträgt die Messwicklungsanzahl N_MESS=1, die Primärwicklungsanzahl N1=2 und die Sekundärwicklungsanzahl N2=7. In vorteilhafter Weise kann die Steuerungseinheit 5 ein Übersetzungsverhältnis j zwischen der Sekundärwicklungsanzahl N2 der Sekundärwicklung 23 und der Messwicklungsanzahl N_MESS der Messwicklung 24 als Proportionalitätsfaktor $\varphi$ zur Ermittlung des Spannungsabfalls U2 der Zündeinrichtung 18 bzw. der Sekundärwicklung 23 verwenden, gemäß $\varphi = j$ mit $j = \dfrac{N2}{N\_MESS}$.

Die erfindungsgemäß ermittelte WIG-Lichtbogenspannung U_LB_WIG enthält allerdings weiterhin den Spannungsabfall der WIG-Schweißleitung 7 und entspricht von der Systematik daher einer Spannung, die von der in Fig.4 gestrichelt dargestellten Spannungsmesseinrichtung 26 erfasst werden würde. Es kann daher vorteilhaft sein, wenn in der Steuerungseinheit 5 ein Schweißstromkreismodell des Schweißstromkreises hinterlegt ist, um zumindest den Spannungsabfall der WIG-Schweißleitung 7 zu ermitteln und bei der Ermittlung der WIG-Lichtbogenspannung U_LB_WIG zu berücksichtigen. Das Schweißstromkreismodell enthält dabei vorzugsweise zumindest das Modell der WIG-Schweißleitung und ggf. das Modell der MSG-Schweißleitung, die vorzugsweise jeweils zumindest einen Ohm'schen Widerstand R, hier R_WIG, R_MSG, und zumindest eine Induktivität L, hier L_WIG, L_MSG, enthalten. Dadurch kann die Steuerungseinheit 5 die Spannungsabfälle berechnen und bei der Ermittlung der WIG-Lichtbogenspannung U_LB_WIG oder ggf. der MSG-Lichtbogenspannung U_LB_MSG berücksichtigen.

Zusätzlich könnte das Schweißstromkreismodell auch ein Modell der Masseleitung M und/oder ein Modell des Werkstücks W enthalten, um einen Spannungsabfall in der Masseleitung M und/oder am Werkstück W zu ermitteln und bei der Ermittlung der WIG-Lichtbogenspannung U_LB_WIG oder ggf. der MSG-Lichtbogenspannung U_LB_MSG berücksichtigen. Die Modellierung des Schweißstromkreises in Fig.4 ist natürlich nur beispielhaft zu verstehen und vereinfacht dargestellte. Es könnten natürlich auch komplexer aufgebaut sein, um den realen Aufbau der Schweißvorrichtung 1 möglichst genau abzubilden. Beispielsweise könnten Modellparameter des Schweißstromkreismodell auch veränderbar sein und z.B. von einem Benutzer, beispielsweise über die Benutzerschnittstelle 15, eingestellt werden.

Der Vorteil der erfindungsgemäßen Ermittlung der WIG-Lichtbogenspannung U_LB_WIG ist nun jener, dass eine Messschaltung lediglich für Spannungspotential an der Messwicklung 24 ausgelegt sein muss und nicht auf das Spannungspotential der Sekundärwicklung 23, das wie erwähnt im Bereich von einigen kV, beispielsweise 10kV betragen kann. Bei entsprechender Auslegung der Zündeinrichtung 18 (z.B. N2=7, N_MESS=1) kann die maximale Messwicklungsspannung U_MESS bei der Zündung des WIG-Lichtbogens LB_WIG und einer Zündspannung U_Z =9100V beispielsweise auf 1300V begrenzt werden. Im normalen Betrieb während des Schweißprozesses (nach der Zündung bzw. zwischen Wiederzündungen) kann die Schweißspannung U in der WIG-Schweißleitung 7 z.B. 437,5V betragen. Die Messwicklungsspannung U_MESS kann entsprechend des Übersetzungsverhältnisses von j=7 folglich 62,5V betragen und die Spannung an der Primärwicklung 22 bei einer Primärwicklungsanzahl N1=2 kann z.B. 125V betragen.

Aufgrund des während der Zündung des WIG-Lichtbogens LB_WIG im Vergleich zur Zündspannung U_Z an der Sekundärwicklung 23 deutlich geringeren Spannungspotentials an der Messwicklung 24, von beispielsweise 1300 V, kann z.B. in der Steuerungseinheit 5 eine relativ einfach aufgebaute Schaltung mit geringerem Messbereich zur Ermittlung der WIG-Lichtbogenspannung U_LB_WIG vorgesehen sein. Die Messschaltung kann dabei beispielsweise als eine digitale oder analoge Messschaltung ausgeführt sein. Bei einer digitalen Messschaltung werden die Signale der Stromquellenspannung U_SQ und der Messwicklungsspannung U_MESS von einen Analog/Digital(A/D)-Wandler digitalisiert und anschließend, z.B. durch einen geeigneten Subtrahierer, digital subtrahiert werden. Die Berechnung des Spannungsabfalls U2 aus der Messwicklungsspannung U_MESS kann dabei vor oder nach der Digitalisierung erfolgen.

Die Ermittlung der WIG-Lichtbogenspannung U_LB_WIG kann in vorteilhafter Weise aber auch mittels einer analogen Messschaltung erfolgen, die z.B. mehrere Operationsverstärker (OPV's), Subtrahierer und Filter enthalten kann. Bekanntermaßen haben OPV's vom Hersteller vorgegebene maximale Eingangsströme und/oder Eingangsspannungen. Um diese vorgegebenen Eingangsströme und/oder Eingangsspannungen nicht zu überschreiten können bekanntermaßen an jedem Eingang eines OPV's ein oder mehrere Ohm'sche Widerstände, sogenannte Kompensationswiderstände, in Reihe geschaltet werden. Aufgrund der erfindungsgemäßen Erfassung der Messspannung U_MESS an der Messwicklung 24 resultiert der Vorteil, dass aufgrund des geringeren Spannungspotentials an der Messwicklung 24 ein geringerer Kompensationswiderstand erforderlich ist, wodurch die analoge Messschaltung einfacher aufgebaut werden kann. Der Aufbau und die Funktionsweise solcher Messschaltungen sind grundsätzlich bekannt, weshalb an dieser Stelle auf weitere Details verzichtet wird.

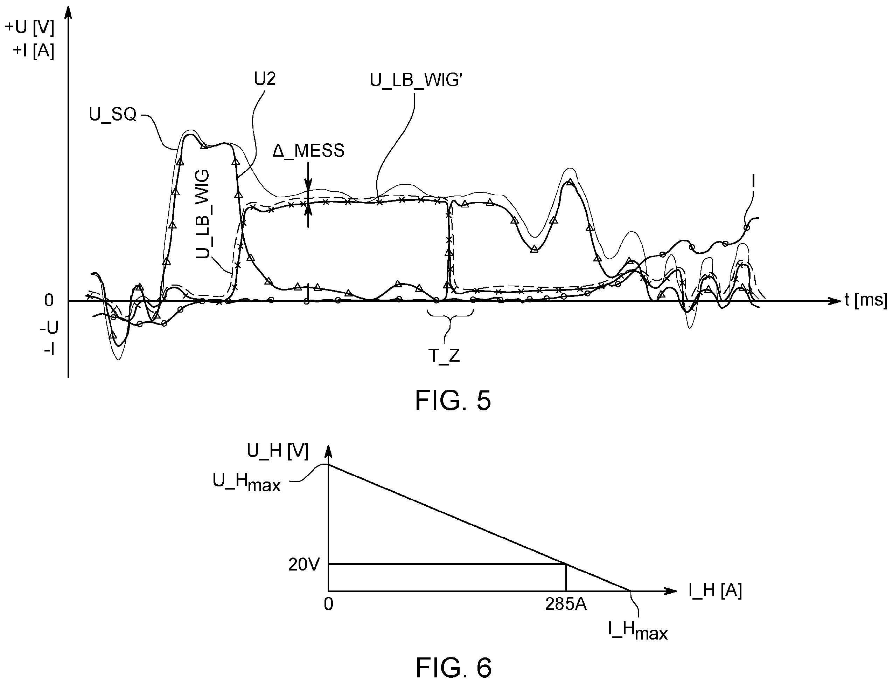

In Fig.5 ist ein zeitlicher Verlauf der Schweißparameter Schweißspannung U und Schweißstrom I während eines Umpolvorgangs eines Wechselstrom(AC)-Schweißprozesses dargestellt, anhand dem die Vorteile der Erfindung nochmals erläutert werden. Bekannterweise wechselt beim AC-Schweißen die Polarität des Schweißstroms I während des Schweißprozesses zwischen Plus und Minus, wie anhand der durchgezogenen Linie mit den runden Markern dargestellt ist. Die von der ersten Spannungsmesseinrichtung 17 erfasste Stromquellenspannung U_SQ ist durch die durchgezogene Linie ohne Marker dargestellt. Der auf Basis der (von der zweiten Spannungsmesseinrichtung 25 erfassten) Messwicklungsspannung U_MESS ermittelte Spannungsabfall U2 an der Sekundärwicklung 23 der Zündeinrichtung 18 ist durch die durchgezogene Linie mit Dreiecks-Markern dargestellt. Die mittels einer Messeinrichtung 26 (siehe Fig.4) erfasste WIG-Lichtbogenspannung U_LB_WIG' ist durch die durchgezogene Linie mit Stern-Markern dargestellt und die erfindungsgemäß ermittelte WIG-Lichtbogenspannung U_LB_WIG ist durch die gestrichelte Linie dargestellt. Die gemessene WIG-Lichtbogenspannung U_LB_WIG' ist dabei lediglich für Vergleichszwecke dargestellt und wird in der Praxis aufgrund der bereits ausführlich beschrieben Nachteile nicht durchgeführt. Im Zeitbereich T_Z erfolgt ein Wiederzünden des Lichtbogens LB, wie durch den raschen Einbruch der gemessenen WIG-Lichtbogenspannung U_LB_WIG' ersichtlich ist.

Anhand der Verläufe in Fig.5 ist gut erkennbar, dass sich während des Umpolvorgangs aufgrund des geringen Schweißstroms I im Bereich des Nulldurchgangs (von beispielsweise 1-5A) die Stromquellenspannung U_SQ stark von der gemessenen WIG-Lichtbogenspannung U_LB_WIG' unterscheidet. Dies ist auf den nicht-linearen Zusammenhang zwischen Induktivität I2 der Sekundärwicklung 23 und dem Schweißstrom I und dem daraus resultierenden Spannungsabfall U1 zurückzuführen, wie bereits anhand der Kennlinie in Fig.3 beschrieben wurde. Bei betragsmäßig größeren Strömen I, beispielsweise >10A, wirkt sich die nicht-lineare Kennlinie der Sekundärwicklung 23 hingegen deutlich geringer aus, weil die Induktivität I2 und folglich der Spannungsabfall U2 aufgrund der Sättigung wesentlich geringer sind. Im Rahmen von Messungen wurde festgestellt, dass eine Abweichung Δ_MESS zwischen der gemessenen Stromquellenspannung U_SQ und der gemessenen WIG-Lichtbogenspannung U_LB_WIG' sehr gut mit dem Spannungsabfall U2 an der Sekundärwicklung 23 korreliert, wie in Fig.5 angedeutet ist.

Eine Differenz zwischen der gemessenen Stromquellenspannung U_SQ und des ermittelten Spannungsabfalls U2 korreliert daher sehr gut mit der gemessenen WIG-Lichtbogenspannung U_LB_WIG', wie anhand der gestrichelten Linie erkennbar ist. Die so ermittelte Lichtbogenspannung U_LB_WIG kann folglich als interessierende WIG-Lichtbogenspannung U_LB_WIG für die Regelung des Schweißprozesses verwendet werden. Wie bereits beschrieben wird die WIG-Lichtbogenspannung U_LB_WIG dabei auf Basis der von der zweiten Spannungsmesseinrichtung 25 erfassten Messwicklungsspannung U_MESS an der Messwicklung 24 und des Proportionalitätsfaktors φ ermittelt, wobei der Proportionalitätsfaktors φ vorzugsweise dem Übersetzungsverhältnis i entspricht.

Gemäß einer weiteren vorteilhaften Ausführungsform der Erfindung ist in der Schweißvorrichtung 1 zumindest eine zusätzliche Hilfsenergiequelle 27 zur Erzeugung einer Hilfsspannung U_H vorgesehen. Die Hilfsenergiequelle 27 kann dabei z.B. als (ideale) Spannungsquelle oder (ideale) Stromquelle ausgebildet sein. Die Hilfsspannung U_H dient dabei zum Wiederzünden des WIG-Lichtbogens LB_WIG während des durchgeführten WIG-Schweißprozesses. In der Regel werden solche Hilfsenergiequellen 27 bei AC-Schweißprozessen verwendet, um während des Umpolvorgangs beim Nulldurchgang des Schweißstroms I kurzzeitig eine relativ hohe Schweißspannung im Bereich von 90V- 500V im Schweißstromkreis zu erzeugen, wodurch das Wiederzünden des WIG-Lichtbogens LB_WIG ermöglicht oder unterstützt wird. Nach dem Wiederzünden des WIG-Lichtbogens LB_WIG wird die Hilfsenergiequelle möglichst rasch wieder deaktiviert.

Bekanntermaßen kann in der Schweißstromquelle 2 ein (nicht dargestellter) Schweißtransformator zur Erzeugung der für den Schweißprozess erforderlichen Schweißspannung vorgesehen sein, im Rahmen der Offenbarung z.B. zur Erzeugung der Stromquellenspannung U_SQ zwischen dem ersten Pol P1 und dem zweiten Pol P2. Die Hilfsspannungsquelle 27 kann dabei beispielsweise als eine zusätzliche Wicklung des Schweißtransformators mit einem anderen Übersetzungsverhältnis ausgebildet sein. Durch das Übersetzungsverhältnis kann die relativ zur Schweißspannung U bzw. Stromquellenspannung U_SQ höhere Hilfsspannung U_H erzeugt werden. Nach einer Gleichrichtung und z.B. einem schaltbaren IGBT (Bipolartransistor mit isolierter Gate-Elektrode) oder MosFet (Metall-Oxid-Halbleiter-Feldeffekttransistor) kann die Hilfsspannung U_H beispielsweise auf die Anschlussbuchsen AB1, AB2 der Schweißvorrichtung 1 geschaltet werden.

Eine beispielhafte Strom-Spannungs-Kennlinie einer Hilfsenergiequelle 27 ist in Fig.6 dargestellt. Darin ist ersichtlich, dass sich ein im Wesentlichen linearer Zusammenhang zwischen der Hilfsspannung U_H und dem Hilfsstrom I_H ergibt. Die maximale Hilfsspannung U_Hmax bei einem Hilfsstrom von I_H=0 kann beispielsweise im Bereich von 270V betragen und der maximale Hilfsstrom I_Hmax bei einer Hilfsspannung U_H=0 kann beispielsweise im Bereich von 300A oder mehr betragen. Der Aufbau und die Funktion solcher Hilfsenergiequellen 27 sind im Stand der Technik grundsätzlich bekannt, weshalb an dieser Stelle auf eine detaillierte Beschreibung verzichtet wird. In Fig.1 ist die Hilfsenergiequelle 27 lediglich schematisch als Teil der Schweißstromquelle 2 angedeutet.

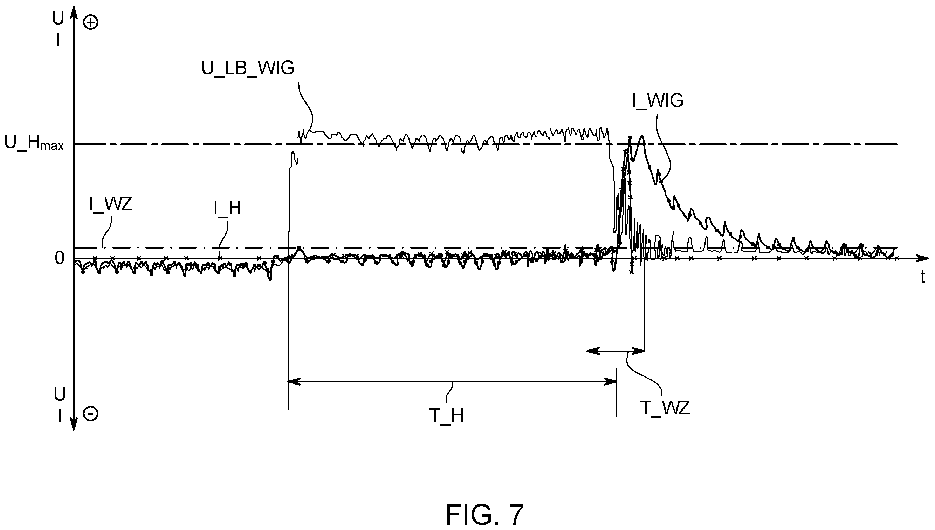

In Fig.7 ist ein Diagramm mit einem zeitlichen Verlauf des Schweißstroms I_WIG, der Lichtbogenspannung U_LB_WIG am WIG-Lichtbogen sowie der Hilfsspannung U_H während eines Umpolvorgangs eines AC-Schweißprozesses unter Verwendung einer Hilfsenergiequelle 27 dargestellt. Der dargestellte Verlauf entspricht dem Stand der Technik. Die durchgezogene Linie ohne Marker symbolisiert die Lichtbogenspannung U_LB_WIG am WIG-Lichtbogen LB_WIG, die durchgezogene Linie mit kreuzförmigen Markern symbolisiert den Hilfsstrom I_H der Hilfsenergiequelle 27 und die durchgezogene Linie mit runden Markern symbolisiert den Schweißstrom I_WIG. Im dargestellten Hilfsenergie-Zeitbereich T_H ist die Hilfsenergiequelle 27 aktiviert, wobei noch kein Lichtbogen gezündet ist, sodass ein sehr großer Ohm'scher Widerstand im Schweißstromkreis vorliegt. Der Hilfsenergie-Zeitbereich T_H kann beispielsweise im Bereich von 250μs betragen. Die Lichtbogenspannung U_LB_WIG entspricht im Hilfsenergie-Zeitbereich T_H somit im Wesentlichen der maximalen Hilfsspannung U_Hmax der Hilfsenergiequelle 27, z.B. im Bereich von 270V.

Am Ende des Hilfsenergie-Zeitbereichs T_H, hier im dargestellten (Wieder-)Zünd-Zeitbereich T_WZ, wird der Lichtbogen LB_WIG gezündet, was durch einen sehr raschen Einbruch der Lichtbogenspannung U_LB_WIG, auf beispielsweise unter 30V, erkennbar ist. Gleichzeitig steigen der Schweißstrom I_WIG und auch der Hilfsstrom I_H rasch an. Bekanntermaßen ist es das Ziel, dass nach dem Zünden des Lichtbogens LB_WIG die Hilfsspannung U_H möglichst rasch abgeschaltet wird, indem Hilfsenergiequelle 27 deaktiviert wird. Bisher wurde zur Detektion des Lichtbogens LB_WIG ein festgelegter (Wieder-)Zünd-Strompegel I_WZ herangezogen und die Hilfsenergiequelle 27 wurde bei Erreichen des Zünd-Strompegel I_WZ deaktiviert. In Fig.7 ist ein beispielhafter Zünd-Strompegel I_WZ, der z.B. 35A betragen kann, in Form einer strichpunktierten horizontalen Linie eingezeichnet. Der Schweißstrom I_WIG kann beispielsweise mittels der in Fig.1+ Fig.4 dargestellten Strommesseinrichtung 28 erfasst werden und die Steuerungseinheit 5 kann die Hilfsenergiequelle in Abhängigkeit des erfassten Schweißstroms I_WIG und des vorgegebenen Zünd-Strompegels I_WZ deaktivieren.

In Fig.7 ist erkennbar, dass der Schweißstrom I_WIG trotz des gewählten Abschaltkriteriums von I_Z=35A bis auf beispielsweise 42A mit einer sehr hohen Stromanstiegsgeschwindigkeit überschwingt. Dieser steile Stromanstieg führt zu einem akustisch sehr lauten Umpolvorgang, welcher vom Schweißer in der Regel als unangenehm empfunden wird. Der Zusammenhang lässt sich auch aus der U/I-Kennlinie der Hilfsenergiequelle 27 (Fig.6) ableiten, wo erkennbar ist, dass bei einer geringen Hilfsspannung U_H von beispielsweise 20V ein sehr hoher Hilfsstrom I_H von beispielsweise 285A resultiert, der nach dem Zünden des Lichtbogens LB_WIG zum raschen Stromanstieg des Schweißstroms I_WIG führt. Es ist also ersichtlich, dass es vorteilhaft ist, das Zünden des Lichtbogens LB_WIG möglichst frühzeitig zu detektieren, um die Hilfsenergiequelle 27 möglichst rasch deaktivieren zu können. Ein Absenken des Zünd-Strompegels I_WZ auf noch geringere Werte ist jedoch nicht zielführend, weil dadurch uU die (Wieder-)Zündung eines stabilen Lichtbogens LB_WIG nicht gewährleistet werden kann.

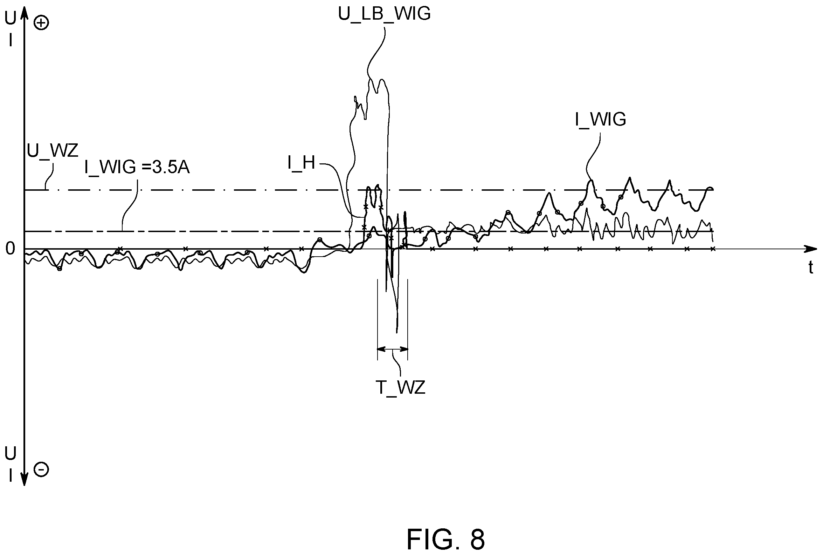

Gemäß einer vorteilhaften Ausführungsform der Erfindung wird daher nicht mehr der Schweißstrom I_WIG zur Detektion des Lichtbogens LB_WIG herangezogen, sondern es wird die erfindungsgemäß ermittelte Lichtbogenspannung U_LB_WIG verwendet, wie anhand Fig.8 erläutert wird. In Fig.8 ist analog wie in Fig.7 ein Diagramm mit einem zeitlichen Verlauf des Schweißstroms I_WIG (durchgezogene Linie mit runden Markern), der Lichtbogenspannung U_LB_WIG am WIG-Lichtbogen (durchgezogene Linie ohne Marker) sowie des Hilfsstroms I_H der Hilfsenergiequelle 27 während eines Umpolvorgangs eines AC-Schweißprozesses (durchgezogene Linie mit kreuzförmigen Markern). Wiederum erfolgt das (Wieder-)Zünden des Lichtbogens LB_WIG im (Wieder-)Zünd-Zeitbereich T_WZ, was durch den raschen Einbruch der Lichtbogenspannung U_LB_WIG erkennbar ist.

Im Gegensatz zum Stand der Technik gemäß Fig.7 erfolgt hierbei die Detektion der (Wieder-)Zündung des Lichtbogens LB_WIG anhand der (auf Basis der gemessenen Messwicklungsspannung U_MESS) ermittelten Lichtbogenspannung U_LB_WIG des Lichtbogens LB_WIG und nicht mehr anhand des Schweißstroms I_WIG. Die Lichtbogenspannung U_LB_WIG kann als genauerer Indikator für die Ionisierung der Gasstrecke zwischen der WIG-Elektrode E1 und dem Werkstück W herangezogen werden. Die Steuerungseinheit 5 kann das (Wieder-)zünden des WIG-Lichtbogens LB_WIG beispielsweise anhand eines vorgegebenen (Wieder-)Zünd-Spannungspegels U_WZ detektieren, der beispielsweise im Bereich von 10 V bis 113 V betragen kann. In Fig.8 ist ein beispielhafter Zünd-Spannungspegels U_WZ= 45 V in Form einer strichpunktierten horizontalen Linie eingezeichnet. Es ist ersichtlich, dass die Hilfsenergiequelle 27 hierbei bereits wesentlich früher, also bei einem deutlich geringeren Schweißstrom I_WIG, von beispielsweise 3,5A deaktiviert wird, wodurch es nicht zu einem starken Überschwingen des Schweißstroms I_WIG wie in Fig.7 kommt. Der Umpolvorgang erfolgt dadurch wesentlich leiser und wird vom Schweißer nicht mehr als störend wahrgenommen. Alternativ zur Detektion des Wieder-Zündens des WIG-Lichtbogens LB_WIG anhand des vorgegebenen Zünd-Spannungspegels U_WZ könnte beispielsweise auch ein vorgegebener zeitlicher Gradient dU_LB_WIG/dt als Bedingung für die Detektion des Wiederzündens des WIG-Lichtbogens LB_WIG verwendet werden.

In manchen Fällen könnte der vorgegebene Zünd-Spannungspegels U_WZ aber beispielsweise auch in unerwünschter Weise erreicht oder überschritten werden, sodass der der Zünd-Spannungspegels U_WZ als alleiniger Indikator für das Wiederzünden des WIG-Lichtbogens LB_WIG unter Umständen nicht ausreicht. Dieser Fall kann beispielsweise eintreten, wenn im Schweißstromkreis eine Selbstinduktionsspannung induziert wird. Dies kann beispielsweise der Fall sein, wenn sich die WIG-Schweißleitung 7 und/oder die Masseleitung M mit der Schweißleitung einer anderen Schweißvorrichtung (oder einer anderen stromführenden Leitung) überkreuzt oder in räumlicher Nähe dazu angeordnet ist, beispielsweise abschnittsweise parallel. Dabei kann durch einen zeitlich veränderlichen Strom in der anderen Schweißleitung (oder der anderen stromführenden Leitung) eine Spannung, die sogenannte Selbstinduktionsspannung, in der WIG-Schweißleitung 7 und/oder der Masseleitung M der gegenständlichen Schweißvorrichtung 1 induziert werden. Wenn diese Selbstinduktionsspannung den vorgegebenen Zünd-Spannungspegels U_WZ erreicht oder überschreitet, dann könnte fälschlicherweise eine Wieder-Zündung des WIG-Lichtbogens LB_WIG detektiert werden, obwohl diese in der Realität gar nicht erfolgt. Dies kann nun in vorteilhafter Weise vermieden werden, wenn zusätzlich zum vorgegebenen Zünd-Spannungspegel U_WZ ein vorgegebener (Wieder-)Zünd-Strompegel I_WZ der Hilfsspannungsquelle 27 (wie anhand Fig.7 erläutert wurde) verwendet wird. Dadurch kann der Zünd-Strompegel I_WZ zur Verifikation der Wieder-Zündung des WIG-Lichtbogens LB_WIG herangezogen werden.

## Patentansprüche

1. Schweißvorrichtung (1) zur Durchführung eines WIG-Schweißprozesses an einem Werkstück (W), wobei in der Schweißvorrichtung (1) eine Schweißstromquelle (2) mit einem ersten Pol (P1) und mindestens einem zweiten Pol (P2) vorgesehen ist, wobei der erste Pol (P1) mit einem, eine nicht-abschmelzenden Elektrode (E1) umfassenden, WIG-Schweißbrenner (6) elektrisch verbunden ist und der zweite Pol (P2) mit dem Werkstück (W) elektrisch verbindbar ist, wobei in der Schweißvorrichtung (1) eine Zündeinrichtung (18) zum berührungslosen Zünden eines WIG-Lichtbogens (LB_WIG) zwischen der nicht-abschmelzenden Elektrode (E1) und dem Werkstück (W) vorgesehen ist, die eine Sekundärwicklung (23) zum Einkoppeln einer Zündspannung (U_Z) in eine WIG-Schweißleitung (7) aufweist, wobei in der Schweißvorrichtung (1) eine erste Spannungsmesseinrichtung (17) zur Erfassung einer Stromquellenspannung (U_SQ) zwischen dem ersten Pol (P1) und dem zweiten Pol (P2) der Schweißstromquelle (2) vorgesehen ist und wobei in der Schweißvorrichtung (1) eine Steuerungseinheit (5) vorgesehen ist, die dazu ausgebildet ist, die Stromquellenspannung (U_SQ) zur Steuerung des WIG-Schweißprozesses zu verwenden, wobei in der Zündeinrichtung (18) eine Messwicklung (24) vorgesehen ist und in der Schweißvorrichtung (1) eine zweite Spannungsmesseinrichtung (25) zur Erfassung einer Messwicklungsspannung (U_MESS) an der Messwicklung (24) vorgesehen ist **und/oder** in der Schweißvorrichtung (1) eine Messwicklungssimulationseinrichtung zur Simulation einer virtuellen Messwicklung (24) der Zündeinrichtung (18) und zur Ermittlung einer Messwicklungsspannung (U_MESS) an der virtuellen Messwicklung (24) vorgesehen ist **und** die Steuerungseinheit (5) dazu ausgebildet ist, die Stromquellenspannung (U_SQ) und die von der zweiten Spannungsmesseinrichtung (25) erfasste oder von der Messwicklungssimulationseinrichtung ermittelte Messwicklungsspannung (U_MESS) zur Ermittlung einer WIG-Lichtbogenspannung (U_LB_WIG) am WIG-Lichtbogen (LB) zu verwenden und die ermittelte WIG-Lichtbogenspannung (U_LB_WIG) zur Steuerung des WIG-Schweißprozesses zu verwenden.

2.  Schweißvorrichtung (1) nach Anspruch 1, **dadurch gekennzeichnet, dass** die Steuerungseinheit (5) dazu ausgebildet ist, aus der Messwicklungsspannung (U_MESS) und einem festgelegten Proportionalitätsfaktor ($\varphi$) einen Spannungsabfall (U2) an der Sekundärwicklung (23) der Zündeinrichtung (18) zu ermitteln und die WIG-Lichtbogenspannung (U_LB_WIG) aus einer Differenz zwischen der Stromquellenspannung (U_SQ) und dem Spannungsabfall (U2) zu ermitteln.

3.  Schweißvorrichtung (1) nach Anspruch 2, **dadurch gekennzeichnet, dass** in der Zündeinrichtung (18) eine Spulenanordnung (20) mit einem Spulenkern (21) vorgesehen ist, an dem die Sekundärwicklung (23) und die Messwicklung (24) angeordnet sind, wobei sich eine Sekundärwicklungsanzahl (N2) der Sekundärwicklung (23) und eine Messwicklungsanzahl (N_MESS) der Messwicklung (24) unterscheiden.

4.  Schweißvorrichtung (1) nach Anspruch 3, **dadurch gekennzeichnet, dass** die Messwicklungsanzahl (N_MESS) kleiner ist als die Sekundärwicklungsanzahl (N2), wobei die Sekundärwicklungsanzahl (N2) vorzugsweise fünf bis zehn, besonders bevorzugt sieben, beträgt und/oder die Messwicklungsanzahl (N_MESS) vorzugsweise maximal zwei beträgt, insbesondere eins.

5.  Schweißvorrichtung (1) nach Anspruch 3 oder 4, **dadurch gekennzeichnet, dass** am Spulenkern (21) der Spulenanordnung (29) eine Primärwicklung (22) mit einer Primärwicklungsanzahl (N1) angeordnet ist, wobei die Primärwicklungsanzahl (N1) kleiner ist als die Sekundärwicklungsanzahl (N2) und größer oder gleich der Messwicklungsanzahl (N_MESS) ist, wobei die Primärwicklungsanzahl (N1) vorzugsweise zwei bis vier beträgt, insbesondere zwei.

6.  Schweißvorrichtung (1) nach einem der Ansprüche 3 bis 5, **dadurch gekennzeichnet, dass** die Steuerungseinheit (5) dazu ausgebildet ist, ein Übersetzungsverhältnis (j) zwischen der Sekundärwicklungsanzahl (N2) und der Messwicklungsanzahl (N_MESS) als Proportionalitätsfaktor ($\varphi$) zur Ermittlung des Spannungsabfalls (U2) der Sekundärwicklung (23) zu verwenden.

7.  Schweißvorrichtung (1) nach einem der Ansprüche 1 bis 6, **dadurch gekennzeichnet, dass** die Schweißvorrichtung (1) zur Durchführung eines MSG-Schweißprozesses ausgebildet ist, wobei der erste Pol (P1) der Schweißstromquelle (2) mit einem, eine abschmelzende Elektrode (E2) umfassenden, MSG-Schweißbrenner (14) verbunden oder verbindbar ist.

8.  Schweißvorrichtung (1) nach einem der Ansprüche 1 bis 7, **dadurch gekennzeichnet, dass** in der Steuerungseinheit (5) eine analoge oder digitale Messschaltung zur Ermittlung der WIG-Lichtbogenspannung (U_LB_WIG) vorgesehen ist, wobei in der Messschaltung vorzugsweise ein Filter zur Filterung zumindest eines Spannungssignals vorgesehen ist.

9.  Schweißvorrichtung (1) nach einem der Ansprüche 1 bis 8, **dadurch gekennzeichnet, dass** in der Steuerungseinheit (5) ein Schweißstromkreismodell hinterlegt ist, das ein Modell der WIG-Schweißleitung (7) und/oder ein Modell einer MSG-Schweißleitung (16) und/oder ein Modell einer Masseleitung (M) und/oder ein Modell des Werkstücks (W) enthält und dass die Steuerungseinheit (5) dazu ausgebildet ist, mittels des Schweißstromkreismodells einen Spannungsabfall in der WIG-Schweißleitung (7) und/oder in der MSG-Schweißleitung (16) und/oder in der Masseleitung M und/oder am Werkstück W zu ermitteln und den ermittelten Spannungsabfall bei der Ermittlung der WIG-Lichtbogenspannung (U_LB_WIG) am WIG-Lichtbogen (LB_WIG) und/oder einer MSG-Lichtbogenspannung (U_LB_MSG) am MSG-Lichtbogen (LB_MSG) zu berücksichtigen, wobei das Modell der WIG-Schweißleitung (7) und/oder das Modell der MSG-Schweißleitung (16) vorzugsweise zumindest einen Ohm'schen Widerstand (R_WIG, R_MSG) und zumindest eine Induktivität (L_WIG, L_MSG) enthält.

10. Schweißvorrichtung (1) nach einem der Ansprüche 1 bis 9, **dadurch gekennzeichnet, dass** in der Schweißvorrichtung (1) eine zusätzliche Hilfsenergiequelle (27) zur Erzeugung einer Hilfsspannung (U_H) zum Wiederzünden des WIG-Lichtbogens (LB_WIG) während des durchgeführten WIG-Schweißprozesses, insbesondere AC-Schweißprozesses, vorgesehen ist und dass die Steuerungseinheit (5) dazu ausgebildet ist, das Wiederzünden des WIG-Lichtbogens (LB_WIG) anhand der ermittelten WIG-Lichtbogenspannung (U_LB_WIG) zu detektieren und bei Detektion des WIG-Lichtbogens (LB_WIG) die Hilfsenergiequelle (27) zu deaktivieren, wobei die Detektion des Wiederzündens des WIG-Lichtbogens (LB_WIG) vorzugsweise anhand eines vorgegebenen Spannungsschwellwerts (U_WZ)erfolgt.

11. Verfahren zur Durchführung eines WIG-Schweißprozesses mit einer nicht-abschmelzenden Elektrode (E1) an einem Werkstück (W), wobei die nicht-abschmelzende Elektrode (E1) über eine WIG-Schweißleitung (7) mit einem ersten Pol (P1) einer Schweißstromquelle (2) elektrisch verbunden wird und das Werkstück (W) mit einem zweiten Pol (P2) der Schweißstromquelle (2) elektrisch verbunden wird, wobei mittels einer Sekundärwicklung (23) einer Zündeinrichtung (18) eine Zündspannung (U_Z) in die WIG-Schweißleitung (7) eingekoppelt wird, um einen WIG-Lichtbogen (LB_WIG) zwischen der nicht-abschmelzenden Elektrode (E1) und dem Werkstück (W) berührungslos zu zünden, wobei zwischen dem ersten Pol (P1) und dem zweiten Pol (P2) der Schweißstromquelle (2) eine Stromquellenspannung (U_SQ) erfasst wird und wobei die erfasste Stromquellenspannung (U_SQ) von einer Steuerungseinheit (5) zur Steuerung des WIG-Schweißprozesses verwendet wird, wobei an einer in der Zündeinrichtung (18) vorgesehenen Messwicklung (24) eine Messwicklungsspannung (U_MESS) erfasst wird oder dass mittels einer Messwicklungssimulationseinrichtung eine virtuelle Messwicklung (24) der Zündeinrichtung (18) simuliert wird und eine Messwicklungsspannung (U_MESS) an der virtuellen Messwicklung (24) ermittelt wird und dass die Steuerungseinheit (5) die Stromquellenspannung (U_SQ) und die erfasste oder ermittelte Messwicklungsspannung (U_MESS) zur Ermittlung einer WIG-Lichtbogenspannung (U_LB_WIG) am WIG-Lichtbogen (LB_WIG) verwendet und die ermittelte WIG-Lichtbogenspannung (U_LB_WIG) zur Steuerung des WIG-Schweißprozesses verwendet.

12. Verfahren nach Anspruch 11, **dadurch gekennzeichnet, dass** die Steuerungseinheit (5) aus der Messwicklungsspannung (U_MESS) und einem Proportionalitätsfaktor ($\varphi$) einen Spannungsabfall (U2) an der Sekundärwicklung (23) ermittelt und die WIG-Lichtbogenspannung (U_LB_WIG) aus einer Differenz zwischen der Stromquellenspannung (U_SQ) und dem Spannungsabfall (U2) ermittelt.

13. Verfahren nach Anspruch 12, **dadurch gekennzeichnet, dass** die Steuerungseinheit (5) ein Übersetzungsverhältnis (j) zwischen einer Sekundärwicklungsanzahl (N2) der Sekundärwicklung (23) und einer Messwicklungsanzahl (N_MESS) der Messwicklung (24) als Proportionalitätsfaktor ($\varphi$) zur Ermittlung des Spannungsabfalls (U2) verwendet, wobei die WIG-Lichtbogenspannung (U_LB_WIG) von der Steuerungseinheit (5) vorzugsweise mittels einer analogen oder digitalen Schaltung ermittelt wird.

14. Verfahren nach einem der Ansprüche 11 bis 13, **dadurch gekennzeichnet, dass** mittels eines in der Steuerungseinheit (5) hinterlegten Schweißstromkreismodells ein Spannungsabfall in der WIG-Schweißleitung (7) und/oder ein Spannungsabfall in einer Masseleitung (M) und/oder ein Spannungsabfall am Werkstück (W) ermittelt wird und dass die Steuerungseinheit (5) den ermittelten Spannungsabfall bei der Ermittlung der WIG-Lichtbogenspannung (U_LB_WIG) berücksichtigt, wobei das Schweißstromkreismodell vorzugsweise zumindest einen Ohm'schen Widerstand (R_WIG) und zumindest eine Induktivität (L_WIG) enthält.

15. Verfahren nach einem der Ansprüche 11 bis 14, **dadurch gekennzeichnet, dass** mittels einer zusätzlichen Hilfsenergiequelle (27) eine Hilfsspannung (U_H) erzeugt wird, um den WIG-Lichtbogen (LB_WIG) während des durchgeführten WIG-Schweißprozesses wiederzuzünden und dass die Steuerungseinheit (5) das Wiederzünden des Lichtbogens (LB_WIG) anhand der ermittelten WIG-Lichtbogenspannung (U_LB_WIG) detektiert und bei Detektion des WIG-Lichtbogens (LB_WIG) die Hilfsspannungsquelle (27) deaktiviert, wobei die Detektion des Wiederzündens des WIG-Lichtbogens (LB_WIG) vorzugsweise anhand eines vorgegebenen Spannungsschwellwerts (U_WZ) erfolgt.

## Claims

1. A welding device (1) for carrying out a TIG welding process on a workpiece (W), wherein a welding power source (2) with a first pole (P1) and at least one second pole (P2) is provided in the welding device (1), wherein the first pole (P1) is electrically connected to a TIG welding torch (6) comprising a non-consumable electrode (E1) and the second pole (P2) is electrically connectable to the workpiece (W), wherein an ignition device (18) for a contactless ignition of a TIG arc (LB_WIG) between the non-consumable electrode (E1) and the workpiece (W) is provided in the welding device (1), which ignition device (18) has a secondary winding (23) for coupling an ignition voltage (U_Z) into a TIG welding cable (7), wherein a first voltage measuring device (17) for detecting a power source voltage (U_SQ) between the first pole (P1) and the second pole (P2) of the welding power source (2) is provided in the welding device (1), and wherein a control unit (5) is provided in the welding device (1), which control unit (5) is designed to use the power source voltage (U_SQ) to control the TIG welding process, wherein a measuring winding (24) is provided in the ignition device (18) and a second voltage measuring device (25) for detecting a measuring winding voltage (U_MESS) at the measuring winding (24) is provided in the welding device (1) and/or a measuring winding simulation device for simulating a virtual measuring winding (24) of the ignition device (18) and for determining a measuring winding voltage (U_MESS) at the virtual measuring winding (24) is provided in the welding device (1) and the control unit (5) is designed to use the power source voltage (U_SQ) and the measuring winding voltage (U_MESS) detected by the second voltage measuring device (25) or determined by the measuring winding simulation device to determine a TIG arc voltage (U_LB_WIG) at the TIG arc (LB) and to use the determined TIG arc voltage (U_LB_WIG) to control the TIG welding process.

2. The welding device (1) according to claim 1, **characterized in that** the control unit (5) is designed to determine a voltage drop (U2) at the secondary winding (23) of the ignition device (18) from the measuring winding voltage (U_MESS) and from a defined proportionality factor (φ) and to determine the TIG arc voltage (U_LB_WIG) from a difference between the power source voltage (U_SQ) and the voltage drop (U2).

3. The welding device (1) according to claim 2, **characterized in that** a coil arrangement (20) with a coil core (21) is provided in the ignition device (18), on which arrangement the secondary winding (23) and the measuring winding (24) are arranged, wherein a number of secondary windings (N2) of the secondary winding (23) and a number of measuring windings (N_MESS) of the measuring winding (24) are different.

4. The welding device (1) according to claim 3, **characterized in that** the number of measuring windings (N_MESS) is smaller than the number of secondary windings (N2), wherein the number of secondary windings (N2) is preferably five to ten, particularly preferably seven, and/or the number of measuring windings (N_MESS) is preferably a maximum of two, in particular one.

5. The welding device (1) according to claim 3 or 4, **characterized in that** a primary winding (22) with a number of primary windings (N1) is arranged on the coil core (21) of the coil arrangement (29), wherein the number of primary windings (N1) is smaller than the number of secondary windings (N2) and is greater than or equal to the number of measuring windings (N_MESS), wherein the number of primary windings (N1) is preferably two to four, in particular two.

6. The welding device (1) according to any one of claims 3 to 5, **characterized in that** the control unit (5) is designed to use a transformation ratio (j) between the number of secondary windings (N2) and the number of measuring windings (N_MESS) as a proportionality factor (φ) for determining the voltage drop (U2) of the secondary winding (23).

7. The welding device (1) according to any one of claims 1 to 6, **characterized in that** the welding device (1) is designed to carry out a MIG welding process, wherein the first pole (P1) of the welding power source (2) is connected or connectable to a MIG welding torch (14) comprising a consumable electrode (E2).

8. The welding device (1) according to any one of claims 1 to 7, **characterized in that** an analog or digital measuring circuit for determining the TIG arc voltage (U_LB_WIG) is provided in the control unit (5), wherein a filter for filtering at least one voltage signal is preferably provided in the measuring circuit.

9. The welding device (1) according to any one of claims 1 to 8, **characterized in that** a welding circuit model is stored in the control unit (5), which model contains a model of the TIG welding cable (7) and/or a model of a MIG welding cable (16) and/or a model of a ground cable (M) and/or a model of the workpiece (W), and **in that** the control unit (5) is designed to determine a voltage drop in the TIG welding cable (7) and/or in the MIG welding cable (16) and/or in the ground cable M and/or on the workpiece W using the welding circuit model and to take the determined voltage drop into account, when determining the TIG arc voltage (U_LB_WIG) on the TIG arc (LB_WIG) and/or a MIG arc voltage (U_LB_MSG) on the MIG arc (LB_MSG), wherein the model of the TIG welding cable (7) and/or the model of the MIG welding cable (16) preferably contains at least one ohmic resistance (R_WIG, R_MSG) and at least one inductance (L_WIG, L_MSG).

10. The welding device (1) according to any one of claims 1 to 9, **characterized in that** an additional auxiliary power source (27) for generating an auxiliary voltage (U_H) for reigniting the TIG arc (LB_WIG) during the TIG welding process, in particular AC welding process, is provided in the welding device (1), and **in that** the control unit (5) is designed to detect the reignition of the TIG arc (LB_WIG) on the basis of the determined TIG arc voltage (U_LB_WIG) and to deactivate the auxiliary power source (27), when the TIG arc (LB_WIG) is detected, wherein the detection of the reignition of the TIG arc (LB_WIG) preferably takes place on the basis of a specified voltage threshold value (U_WZ).

**11.** A method for carrying out a TIG welding process with a non-consumable electrode (E1) on a workpiece (W), wherein the non-consumable electrode (E1) is electrically connected via a TIG welding cable (7) to a first pole (P1) of a welding power source (2) and the workpiece (W) is electrically connected to a second pole (P2) of the welding power source (2), wherein an ignition voltage (U_Z) is coupled into the TIG welding cable (7) by a secondary winding (23) of an ignition device (18) to ignite a TIG arc (LB_WIG) between the non-consumable electrode (E1) and the workpiece (W) without contact, wherein a power source voltage (U_SQ) is detected between the first pole (P1) and the second pole (P2) of the welding power source (2), and wherein the detected power source voltage (U_SQ) is used by a control unit (5) to control the TIG welding process, wherein a measuring winding voltage (U_MESS) is detected at a measuring winding (24) provided in the ignition device (18), or in that a virtual measuring winding (24) of the ignition device (18) is simulated by a measuring winding simulation device and a measuring winding voltage (U_MESS) is determined at the virtual measuring winding (24), and in that the control unit (5) uses the power source voltage (U_SQ) and the detected or determined measuring winding voltage (U_MESS) to determine a TIG arc voltage (U_LB_WIG) at the TIG arc (LB_WIG) and uses the determined TIG arc voltage (U_LB_WIG) to control the TIG welding process.

**12.** The method according to claim 11, **characterized in that** the control unit (5) determines a voltage drop (U2) at the secondary winding (23) from the measuring winding voltage (U_MESS) and a proportionality factor ($\varphi$) and determines the TIG arc voltage (U_LB_WIG) from a difference between the power source voltage (U_SQ) and the voltage drop (U2).

**13.** The method according to claim 12, **characterized in that** the control unit (5) uses a transformation ratio (j) between a number of secondary windings (N2) of the secondary winding (23) and a number of measuring windings (N_MESS) of the measuring winding (24) as a proportionality factor ($\varphi$) for determining the voltage drop (U2), wherein the TIG arc voltage (U_LB_WIG) is determined by the control unit (5), preferably by an analog or digital circuit.

**14.** The method according to any one of claims 11 to 14, **characterized in that** a voltage drop in the TIG welding cable (7) and/or a voltage drop in a ground cable (M) and/or a voltage drop at the workpiece (W) is determined by a welding circuit model stored in the control unit (5), and **in that** the control unit (5) takes the determined voltage drop into account when determining the TIG arc voltage (U_LB_WIG), wherein the welding circuit model preferably contains at least one ohmic resistance (R_WIG) and at least one inductance (L_WIG).

**15.** The method according to any one of claims 11 to 15, **characterized in that** an auxiliary voltage (U_H) is generated by an additional auxiliary power source (27) to reignite the TIG arc (LB_WIG) during the TIG welding process carried out, and **in that** the control unit (5) detects the reignition of the arc (LB_WIG) on the basis of the determined TIG arc voltage (U_LB_WIG) and deactivates the auxiliary power source (27), when the TIG arc (LB_WIG) is detected, wherein the detection of the reignition of the TIG arc (LB_WIG) preferably takes place on the basis of a specified voltage threshold value (U_WZ).

**Revendications**

**1.** Dispositif de soudage (1) permettant de réaliser un processus de soudage TIG sur une pièce (W), dans lequel une source de courant de soudage (2) comportant un premier pôle (P1) et au moins un second pôle (P2) est prévue dans le dispositif de soudage (1), dans lequel le premier pôle (P1) est connecté électriquement à un chalumeau de soudage TIG (6) comprenant une électrode non fusible (E1) et le second pôle (P2) peut être connecté électriquement à la pièce (W), dans lequel un appareil d'amorçage (18) est prévu dans le dispositif de soudage (1) pour l'amorçage sans contact d'un arc électrique TIG (LB_WIG) entre l'électrode non fusible (E1) et la pièce (W), lequel appareil d'amorçage présente un enroulement secondaire (23) pour l'injection d'une tension d'amorçage (U_Z) dans une ligne de soudage TIG (7), dans lequel un premier appareil de mesure de tension (17) est prévu dans le dispositif de soudage (1) pour la détection d'une tension de source de courant (U_SQ) entre le premier pôle (P1) et le second pôle (P2) de la source de courant de soudage (2) et dans lequel une unité de commande (5) est prévue dans le dispositif de soudage (1), laquelle est configurée pour utiliser la tension de source de courant (U_SQ) pour la commande du processus de soudage TIG, dans lequel un enroulement de mesure (24) est prévu dans l'appareil d'amorçage (18) et un second appareil de mesure de tension (25) est prévu dans le dispositif de soudage (1) pour la détection d'une tension d'enroulement de mesure (U_MESS) sur l'enroulement de mesure (24) et/ou un appareil de simulation d'enroulement de mesure est prévu dans le dispositif de soudage (1) pour la simulation d'un enroulement de mesure (24) virtuel de l'appareil d'amorçage (18) et pour la détermination d'une tension d'enroulement de mesure (U_MESS) sur l'enroulement de mesure (24) virtuel et l'unité de commande (5) est configurée pour utiliser la tension de source de courant (U_SQ) et la tension d'enroulement de mesure (U_MESS) détectée par le second appareil de mesure de tension (25) ou déterminée par l'appareil de simulation d'enroulement de mesure pour la détermination d'une tension d'arc électrique TIG (U_LB_WIG) sur l'arc électrique TIG (LB) et pour utiliser la tension d'arc électrique TIG (U_LB_WIG) déterminée pour la commande du processus de soudage TIG.

2. Dispositif de soudage (1) selon la revendication 1, **caractérisé en ce que** l'unité de commande (5) est configurée pour déterminer une chute de tension (U2) au niveau de l'enroulement secondaire (23) de l'appareil d'amorçage (18) à partir de la tension d'enroulement de mesure (U_MESS) et d'un facteur de proportionnalité (φ) spécifié, et pour déterminer la tension d'arc électrique TIG (U_LB_WIG) à partir d'une différence entre la tension de source de courant (U_SQ) et la chute de tension (U2).

3. Dispositif de soudage (1) selon la revendication 2, **caractérisé en ce qu'**est prévu dans l'appareil d'amorçage (18) un agencement de bobines (20) comportant un noyau de bobine (21) sur lequel sont disposés l'enroulement secondaire (23) et l'enroulement de mesure (24), dans lequel un nombre d'enroulements secondaires (N2) de l'enroulement secondaire (23) et un nombre d'enroulements de mesure (N_MESS) de l'enroulement de mesure (24) sont différents.

4. Dispositif de soudage (1) selon la revendication 3, **caractérisé en ce que** le nombre d'enroulements de mesure (N_MESS) est inférieur au nombre d'enroulements secondaires (N2), dans lequel le nombre d'enroulements secondaires (N2) va de préférence de cinq à dix, de manière particulièrement préférée est de sept, et/ou le nombre d'enroulements de mesure (N_MESS) est de préférence au maximum de deux, en particulier de un.

5. Dispositif de soudage (1) selon la revendication 3 ou 4, **caractérisé en ce qu'**un enroulement primaire (22) comportant un certain nombre d'enroulements primaires (N1) est disposé sur le noyau de bobine (21) de l'agencement de bobines (29), dans lequel le nombre d'enroulements primaires (N1) est inférieur au nombre d'enroulements secondaires (N2) et est supérieur ou égal au nombre d'enroulements de mesure (N_MESS), dans lequel le nombre d'enroulements primaires (N1) va de préférence de deux à quatre, en particulier est de deux.

6. Dispositif de soudage (1) selon l'une des revendications 3 à 5, **caractérisé en ce que** l'unité de commande (5) est configurée pour utiliser un rapport de transmission (j) entre le nombre d'enroulements secondaires (N2) et le nombre d'enroulements de mesure (N_MESS) comme facteur de proportionnalité (φ) pour la détermination de la chute de tension (U2) de l'enroulement secondaire (23).

7. Dispositif de soudage (1) selon l'une des revendications 1 à 6,
**caractérisé en ce que** le dispositif de soudage (1) est conçu pour réaliser un processus de soudage MSG, dans lequel le premier pôle (P1) de la source de courant de soudage (2) est connecté ou peut être connecté à un chalumeau de soudage MSG (14) comprenant une électrode fusible (E2).

8. Dispositif de soudage (1) selon l'une des revendications 1 à 7,
**caractérisé en ce qu'**est prévu dans l'unité de commande (5) un circuit de mesure analogique ou numérique pour la détermination de la tension d'arc électrique TIG (U_LB_WIG), dans lequel un filtre est de préférence prévu dans le circuit de mesure pour le filtrage d'au moins un signal de tension.

9. Dispositif de soudage (1) selon l'une des revendications 1 à 8,
**caractérisé en ce que** dans l'unité de commande (5) est enregistré un modèle de circuit de courant de soudage qui contient un modèle de la ligne de soudage TIG (7) et/ou un modèle d'une ligne de soudage MSG (16) et/ou un modèle d'une ligne à la masse (M) et/ou un modèle de la pièce (W) **et en ce que** l'unité de commande (5) est configurée pour déterminer, au moyen du modèle de circuit de courant de soudage, une chute de tension dans la ligne de soudage TIG (7) et/ou dans la ligne de soudage MSG (16) et/ou dans la ligne à la masse (M) et/ou sur la pièce (W) et pour tenir compte de la chute de tension déterminée lors de la détermination de la tension d'arc électrique TIG (U_LB_WIG) sur l'arc électrique TIG (LB_WIG) et/ou d'une tension d'arc électrique MSG (U_LB_MSG) sur l'arc électrique MSG (LB_MSG), dans lequel le modèle de la ligne de soudage TIG (7) et/ou le modèle de la ligne de soudage MSG (16) contiennent de préférence au moins une résistance ohmique (R_WIG, R_MSG) et au moins une inductance (L_WIG, L_MSG).

10. Dispositif de soudage (1) selon l'une des revendications 1 à 9,
**caractérisé en ce qu'**est prévue dans le dispositif de soudage (1) une source d'énergie auxiliaire (27) supplémentaire pour la génération d'une tension auxiliaire (U_H) pour le réamorçage de l'arc électrique TIG (LB_WIG) pendant le processus de soudage TIG réalisé, en particulier un processus de soudage à courant alternatif, **et en ce que** l'unité de commande (5) est configurée pour détecter le réamorçage de l'arc électrique TIG (LB_WIG) à l'aide de la tension d'arc électrique TIG (U_LB_WIG) déterminée et, en cas de détection de l'arc électrique TIG (LB_WIG), pour désactiver la source d'énergie auxiliaire (27), dans lequel la détection du réamorçage de l'arc électrique TIG (LB_WIG) est effectué de préférence à l'aide d'une valeur seuil de tension (U_WZ) prédéfinie.

11. Procédé permettant de réaliser un processus de soudage TIG avec une électrode non fusible (E1) sur une pièce (W), dans lequel l'électrode non fusible (E1) est connectée électriquement à un premier pôle (P1) d'une source de courant de soudage (2) par l'intermédiaire d'une ligne de soudage TIG (7) et la pièce (W) est connectée électriquement à un second pôle (P2) de la source de courant de soudage (2), dans lequel une tension d'amorçage (U_Z) est injectée dans la ligne de soudage TIG (7) au moyen d'un enroulement secondaire (23) d'un appareil d'amorçage (18) afin d'amorcer sans contact un arc électrique TIG (LB_WIG) entre l'électrode non fusible (E1) et la pièce (W), dans lequel une tension de source de courant (U_SQ) est détectée entre le premier pôle (P1) et le second pôle (P2) de la source de courant de soudage (2) et dans lequel la tension de source de courant (U_SQ) détectée est utilisée par une unité de commande (5) pour la commande du processus de soudage TIG, dans lequel une tension d'enroulement de mesure (U_MESS) est détectée au niveau d'un enroulement de mesure (24) prévu dans l'appareil d'amorçage (18) ou en ce qu'un enroulement de mesure (24) virtuel de l'appareil d'amorçage (18) est simulé au moyen d'un appareil de simulation d'enroulement de mesure et une tension d'enroulement de mesure (U_MESS) est déterminée au niveau de l'enroulement de mesure (24) virtuel et en ce que l'unité de commande (5) utilise la tension de source de courant (U_SQ) et la tension d'enroulement de mesure (U_MESS) détectée ou déterminée pour la détermination d'une tension d'arc électrique **TIG** (U_LB_WIG) sur l'arc électrique TIG (LB_WIG) et utilise la tension d'arc électrique TIG (U_LB_WIG) déterminée pour la commande du processus de soudage TIG.

12. Procédé selon la revendication 11, **caractérisé en ce que** l'unité de commande (5) détermine une chute de tension (U2) au niveau de l'enroulement secondaire (23) à partir de la tension d'enroulement de mesure (U_MESS) et d'un facteur de proportionnalité ($\varphi$) et détermine la tension d'arc électrique TIG (U_LB_WIG) à partir d'une différence entre la tension de source de courant (U_SQ) et la chute de tension (U2).

13. Procédé selon la revendication 12, **caractérisé en ce que** l'unité de commande (5) utilise un rapport de transmission (j) entre un nombre d'enroulements secondaires (N2) de l'enroulement secondaire (23) et un nombre d'enroulements de mesure (N_MESS) de l'enroulement de mesure (24) comme facteur de proportionnalité ($\varphi$) pour la détermination de la chute de tension (U2), dans lequel la tension d'arc électrique TIG (U_LB_WIG) est déterminée par l'unité de commande (5), de préférence au moyen d'un circuit analogique ou numérique.

14. Procédé selon l'une des revendications 11 à 13,
**caractérisé en ce qu'**une chute de tension dans la ligne de soudage TIG (7) et/ou une chute de tension dans une ligne à la masse (M) et/ou une chute de tension au niveau de la pièce (W) sont déterminées au moyen d'un modèle de circuit de courant de soudage enregistré dans l'unité de commande (5), **et en ce que** l'unité de commande (5) tient compte de la chute de tension déterminée lors de la détermination de la tension d'arc électrique TIG (U_LB_WIG), dans lequel le modèle de circuit de courant de soudage contient de préférence au moins une résistance ohmique (R_WIG) et au moins une inductance (L_WIG).

15. Procédé selon l'une des revendications 11 à 14,
**caractérisé en ce qu'**une tension auxiliaire (U_H) est générée au moyen d'une source d'énergie auxiliaire (27) supplémentaire afin de réamorcer l'arc électrique TIG (LB_WIG) pendant le processus de soudage TIG réalisé **et en ce que** l'unité de commande (5) détecte le réamorçage de l'arc électrique (LB_WIG) à l'aide de la tension d'arc électrique TIG (U_LB_WIG) déterminée et désactive la source de tension auxiliaire (27) en cas de détection de l'arc électrique TIG (LB_WIG), dans lequel la détection du réamorçage de l'arc électrique TIG (LB_WIG) est effectuée de préférence à l'aide d'une valeur seuil de tension (U_WZ) prédéfinie.

FIG. 1

FIG. 2

FIG. 3

**FIG. 4**

EP 4 419 283 B1

FIG. 5

FIG. 6

FIG. 7

FIG. 8

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1021269 B1
- US 2561995 A